# EUROPEAN PATENT APPLICATION

(11) **EP 4 248 748 A1**
(43) Date of publication of application: **27.09.2023**
(21) Application number: 23160093.3
(22) Date of filing: 06.03.2023
(51) Int. Cl.: A01M 7/00

(54) **SPRAYING MACHINE CONTROL METHOD, SPRAYING MACHINE CONTROL PROGRAM, AND SPRAYING MACHINE**

(30) Priority: 23.03.2022 JP 2022046859
(71) Applicant: Yanmar Holdings Co., Ltd., Osaka-shi, Osaka (JP)
(72) Inventor: UENO, So, Okayama (JP)
(74) Representative: Novagraaf International SA

(57) **Abstract**

[Problem] To provide a spraying machine control method, a spraying machine control program, and a spraying machine capable of easily spraying a spraying material as planned.

[Solution] Provided is a method for controlling a spraying machine including a machine body 10 automatically travelable along a target route andmultiple spraying nozzles 41 supported by the machine body 10 and spraying a spraying material at least during automatic traveling of the machine body 10. The control method includes determining whether or not a monitoring target, which includes at least some of the multiple spraying nozzles 41, has been clogged, andstopping spraying of the spraying material in a case where the monitoring target has been clogged.

## Description

### TECHNICAL FIELD

The present invention relates to a spraying machine control method, a spraying machine control program, and a spraying machine capable of spraying a spraying material during automatic traveling.

### BACKGROUND ART

As the related art, there is known a spraying machine (agricultural vehicle) including a traveler (crawler traveler) having a pair of crawlers arranged in a right-left direction, a machine body (left vehicle body and right vehicle body), an engine, and spraying nozzles (chemical solution sprayers) (see, for example, Patent Document 1). In the spraying machine according to the related art, the pair of crawlers of the traveler travels with sandwiching a plant, which is a spraying target, in the right-left direction. The left vehicle body of the machine body is mainly supported by the left crawler. The right vehicle body of the machine body is mainly supported by the right crawler. The engine is arranged on a left vehicle body side.

In the spraying machine according to the related art, the spraying nozzles are each provided at the left vehicle body and the right vehicle body. The spraying nozzles each spray a chemical agent to both the right side and the left side. Thus, the spraying machine according to the related art can simultaneously spray the chemical agent to a plant passing through between the left and right crawlers, a plant positioned on the left side of the spraying machine, and a plant positioned on the right side of the spraying machine. The spraying machine can spray the chemical agent to the plants while automatically traveling (autonomously traveling) based on a current position and an autonomous traveling route.

### PRIOR ART DOCUMENT

### PATENT DOCUMENT

Patent Document 1: JP-A-2020-152285

### SUMMARY OF INVENTION

### TECHNICAL PROBLEM

In the related art described above, if a work of spraying a spraying material (chemical agent) continues in a state in which the spraying nozzle is clogged, there is a probability that automatic traveling of the spraying machine ends without the spraying material sprayed as planned.

An object of the present invention is to provide a spraying machine control method, a spraying machine control program, and a spraying machine capable of easily spraying a spraying material as planned.

### SOLUTION TO PROBLEM

A method for controlling a spraying machine according to one aspect of the present invention is a method for controlling a spraying machine including a machine body automatically travelable along a target route and multiple spraying nozzles supported by the machine body and spraying a spraying material at least during automatic traveling of the machine body. The control method includes determining whether or not a monitoring target, which includes at least some of the multiple spraying nozzles, has been clogged, and stopping spraying of the spraying material in a case where the monitoring target has been clogged.

A program for controlling a spraying machine according to another aspect of the present invention is a spraying machine control program causing one or more processors to execute the spraying machine control method.

A spraying machine according to still another aspect of the present invention includes a machine body, multiple spraying nozzles, a determination processor, and a spraying processor. The machine body is automatically travelable along a target route. The multiple spraying nozzles are supported by the machine body, and spray a spraying material at least during automatic traveling of the machine body. The determination processor determines whether or not a monitoring target, which includes at least some of the multiple spraying nozzles, has been clogged. The spraying processor stops spraying of the spraying material in a case where the monitoring target has been clogged.

### ADVANTAGEOUS EFFECTS OF INVENTION

According to the present invention, the spraying machine control method, the spraying machine control program, and the spraying machine capable of easily spraying the spraying material as planned can be provided.

### BRIEF DESCRIPTION OF DRAWINGS

Fig. 1 is an external view of a spraying machine according to a first embodiment from the front left side;
Fig. 2 is an external view of the spraying machine according to the first embodiment from the back side;
Fig. 3 is a view showing one example of crop columns for which the spraying machine according to the first embodiment is used;
Fig. 4 is a schematic view showing an overall configuration of an automatic traveling system using the spraying machine according to the first embodiment;
Fig. 5 is a schematic block diagram showing a main configuration of the spraying machine according to the first embodiment;
Fig. 6 is an external view of the spraying machine according to the first embodiment from the left side;
Fig. 7 is an external view of the spraying machine according to the first embodiment from the right side;
Fig. 8 is an external view of the spraying machine according to the first embodiment from above;
Fig. 9 is an external view of the spraying machine according to the first embodiment from the back side;
Fig. 10 is a schematic view of the spraying machine according to the first embodiment obliquely from the rear side;
Fig. 11 is a schematic diagram for describing the configuration of a spraying device of the spraying machine according to the first embodiment;
Fig. 12 is a view for describing one example of an automatic traveling target route for the spraying machine according to the first embodiment;
Fig. 13 is a flowchart showing one example of processing particularly related to determination on clogging in a spraying nozzle in a control method according to the

### first embodiment; and

Fig. 14 is a schematic diagram for describing the configuration of a spraying device of a spraying machine according to a second embodiment.

### DESCRIPTION OF EMBODIMENTS

Hereinafter, embodiments of the present invention will be described with reference to the attached drawings. The following embodiments are embodied examples of the present invention, and are not intended to limit the technical scope of the present invention.

### (First Embodiment)

### [1] Overall Configuration

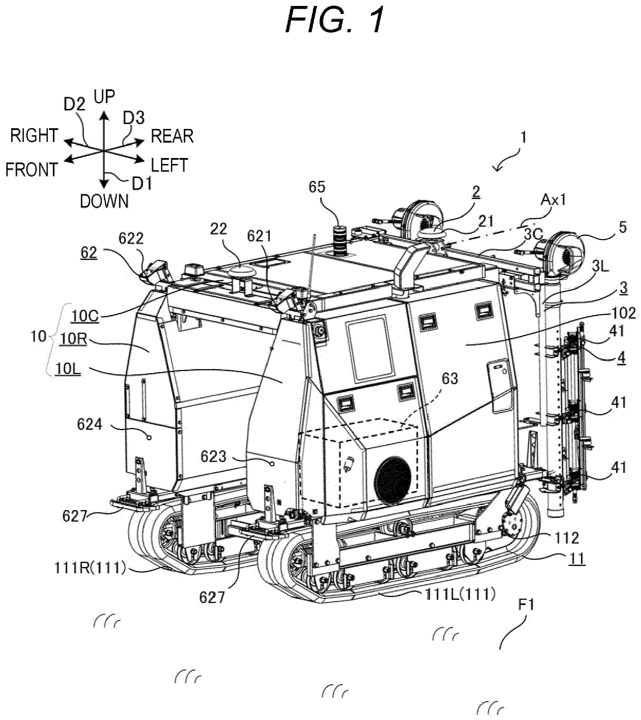

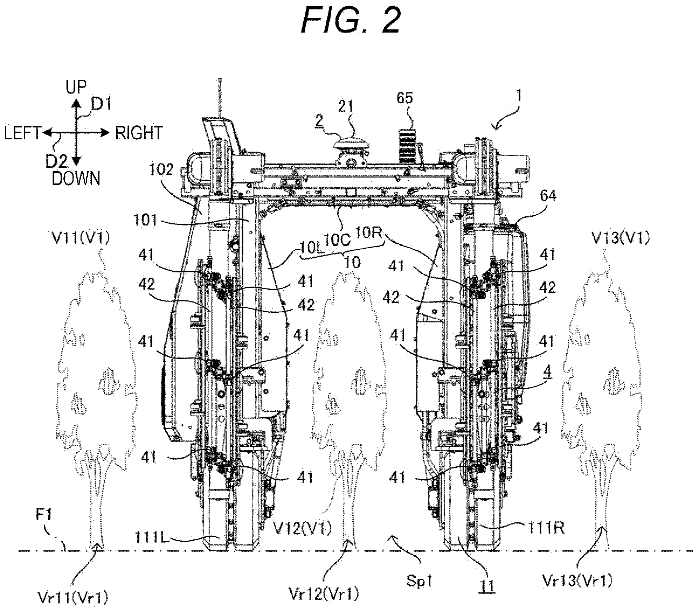

First, an overall configuration of a spraying machine 1 according to the present embodiment will be described with reference to Figs. 1 to 4. In the present embodiment, the spraying machine 1 performs a spraying work of spraying a spraying material such as a chemical solution, water, or a fertilizer to crops V1 (see Fig. 2) grown in a field F1. The spraying machine 1 is one example of a "work machine" that performs various works in a work target area such as the field F1.

That is, the spraying machine 1 is a work machine capable of executing, as a work, a spraying work of spraying a spraying material such as a chemical solution, water, or a fertilizer. The term "work machine" as used in the present disclosure includes, for example, a work vehicle such as a tractor, a rice transplanter, a sprayer, a seeder, a transplanter, and a combine, in addition to a spraying machine. That is, the work machine includes a work vehicle. The work machine is not limited to a "vehicle," and may be, for example, a work flying object such as a drone or a multicopter for spraying a chemical solution, water, or a fertilizer. Further, the term "work machine" as used in the present disclosure is not limited to an agricultural machine, and may be, for example, a construction machine.

The term "field" as used in the present disclosure is one example of the work target area where the spraying machine 1, which is the work machine, performs various works such as the spraying work while moving, and includes an orchard, a pasture, a rice field, a garden and the like where an agricultural product is grown. In this case, the crops V1 grown in the field F1 are an agricultural product. Further, in a case where plants are grown in a tree plantation, the tree plantation is the field F1, and in a case where trees to be wood are grown in a forest as in forestry, the forest is the field F1. In this case, the crops V1 grown in the field F1 are plants or trees, for example. Note that the work target area where the work machine performs the work is not limited to the field F1, and may be an area other than the field F1. For example, in a case where the work machine is a construction machine, a site where the construction machine performs a work is a work target area.

As one example in the present embodiment, the spraying machine 1 is assumed to be a vehicle that sprays the chemical solution to the crops V1 grown in the field F1 while moving in the field F1 which is an orchard such as a vineyard or an apple orchard. In this case, the chemical solution is one example of the spraying material. The crop V1 is one example of a spraying target to which the spraying material (chemical solution) is sprayed, and for example, is a grape tree. The crop V1, which is the spraying target, is also one example of a work target for the work by the spraying machine 1 which is the work machine. The term "chemical solution" which is the spraying material as described herein is an agricultural chemical used, e.g., for improving the efficiency of agriculture or preserving agricultural crops, and includes a herbicide, a bactericide, a fungicide, an insecticide, a rodenticide, a growth promoter and a germination inhibitor for the crop V1, and the like.

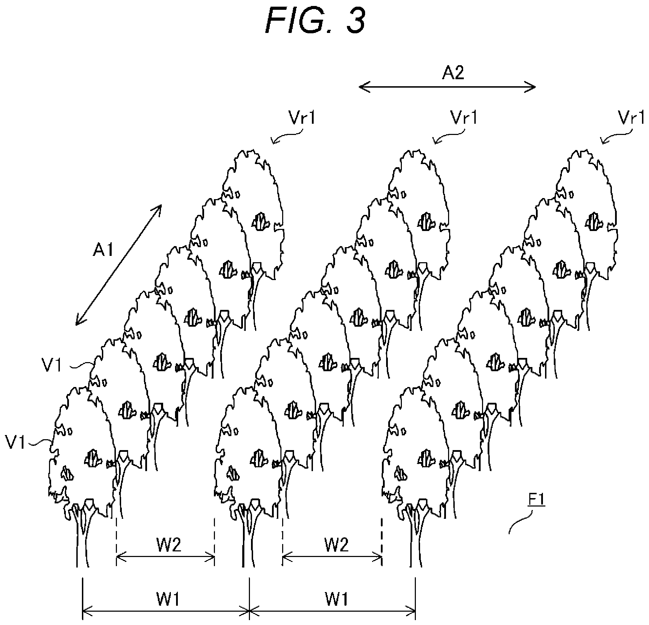

The crops V1 are arranged in multiple columns at predetermined intervals in the field F1. Specifically, as shown in Fig. 3, the multiple crops V1 are planted linearly in a longitudinal direction A1 as viewed in plane. The multiple crops V1 linearly arranged in the longitudinal direction A1 form crop columns Vr1. Fig. 3 shows, as an example, three crop columns Vr1, each of which includes six crops V1 arranged in the longitudinal direction A1. The crop columns Vr1 are arranged at predetermined pitches W1 in a width direction A2. Thus, a work passage having a width W2 (< W1) corresponding to the interval between the crop columns Vr1 and extending along the longitudinal direction A1 is formed between adjacent ones of the crop columns Vr1. The spraying machine 1 sprays the spraying material (chemical solution) to the crops V1 while moving (traveling) in the longitudinal direction A1 on the work passages.

As will be described in detail later, the spraying machine 1 that travels in the field F1 includes a machine body 10 having a gate shape. That is, the machine body 10 includes a first block 10L and a second block 10R arranged in a right-left direction D2 and a coupling portion 10C that couples upper end portions of the first block 10L and the second block 10R to each other. Thus, the machine body 10 has such a gate shape that the first block 10L, the second block 10R, and the coupling portion 10C surround three sides of a space Sp 1, i.e., the left, right, and top of the space Sp1. That is, the space Sp1 opened in a front-rear direction D3 is formed inside the machine body 10.

The spraying machine 1 further includes travelers 11 having a pair of crawlers 111L, 111R arranged in the right-left direction D2. The crawlers 111L, 111R are each provided below the first block 10L and the second block 10R, and are positioned on both sides of the space Sp1 in the right-left direction D2.

As shown in Fig. 2, the spraying machine 1 can spray the spraying material (chemical solution) to the crops V1 of a certain crop column Vr1 and the crops V1 of crop columns Vr1 adjacent to the certain crop column Vr1 while traveling in such a posture that the machine body 10 in the gate shape straddles the certain crop column Vr1. In other words, the spraying machine 1 can travel such that the crops V1, which are the spraying target (work target), pass through the space Sp1 inside the machine body 10 in the gate shape. That is, as shown in Fig. 2 as an example, in a case where there are three crop columns Vr11, Vr12, Vr13 arranged in the right-left direction D2, the spraying machine 1 can travel in such a posture that the machine body 10 straddles an arbitrary one Vr1 of these three crop columns Vr11, Vr12, Vr13.

Here, if the machine body 10 straddles the center crop column Vr12, the first block 10L travels on the work passage between the left crop column Vr11 and the crop column Vr12, and the second block 10R travels on the work passage between the right crop column Vr13 and the crop column Vr12. The spraying machine 1 can simultaneously spray the spraying material (chemical solution) to crops V11 of the crop column Vr11, crops V12 of the crop column Vr12, and crops V13 of the crop column Vr13. As described above, the spraying machine 1 according to the present embodiment can simultaneously spray the spraying material (chemical solution) to the three columns of spraying target (crops V1) while traveling, and therefore, the efficiency of the spraying work is higher than that in a configuration in which the spraying material is sprayed to the spraying target one by one.

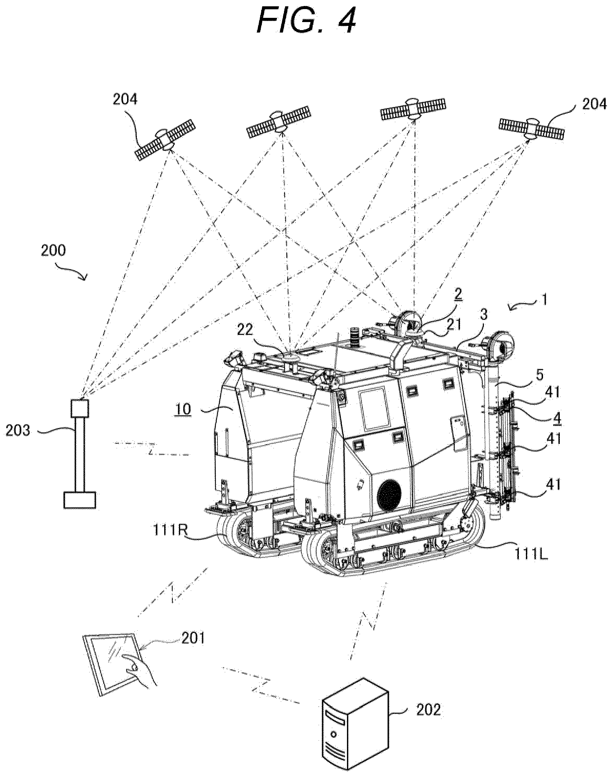

Further, as one example in the present embodiment, the spraying machine 1 is a drone that is not operated by a person (operating person) (including remote operation), but is operated automatically. Thus, as shown in Fig. 4, the spraying machine 1, an operation terminal 201, a server 202, a base station 203, satellites 204 and the like together form an automatic traveling system 200. In other words, the automatic traveling system 200 includes the spraying machine 1, the operation terminal 201, the server 202, the base station 203, and the satellites 204. Note that at least one of the operation terminal 201, the server 202, the base station 203, or the satellites 204 is not necessarily included in components of the automatic traveling system 200, and for example, the automatic traveling system 200 does not necessarily include the satellites 204.

The spraying machine 1, the operation terminal 201, and the server 202 is communicable with each other. The term "communicable" as used in the present disclosure means that information can be exchanged directly or indirectly via, e.g., a communication network (network) or a repeater by an appropriate communication method such as wired communication or wireless communication (communication using radio waves or light as a medium). For example, the spraying machine 1 and the operation terminal 201 are communicable with each other via, e.g., the Internet, a local area network (LAN), a wide area network (WAN), a public telephone line, a mobile telephone network, a packet network, or a wireless LAN. Each of the spraying machine 1 and the operation terminal 201 is also communicable with the server 202 via, e.g., the Internet.

The satellite 204 is a positioning satellite forming a satellite positioning system such as a global navigation satellite system (GNSS), and transmits a GNSS signal (satellite signal). The base station 203 is a reference point (reference station) forming the satellite positioning system. The base station 203 transmits correction information for calculating, e.g., the current position of the spraying machine 1 to the spraying machine 1.

The spraying machine 1 according to the present embodiment includes a positioning device 2 that detects the current position (e.g., latitude, longitude, and altitude), current orientation, and the like of the machine body 10. The positioning device 2 executes positioning processing of specifying (calculating) the current position, current orientation, and the like of the machine body 10 using the GNSS signals transmitted from the satellites 204. The positioning device 2 employs, for example, a relatively-high-accurate positioning method, such as real time kinematic (RTK) positioning, for performing positioning based on positioning information (e.g., the GNSS signals) received by two receivers (the base station 203 and an antenna 21) and the correction information generated by the base station 203.

The operation terminal 201 is, for example, an information processing device such as a tablet terminal or a smartphone. The operation terminal 201 includes a display that displays various types of information, such as a liquid crystal display or an organic EL display, and an operator that receives operation, such as a touch panel, a mouse, or a keyboard. The operating person can perform an operation of registering various types of information by operating the operator on an operation screen displayed on the display. Further, the operating person can also instruct the spraying machine 1 to start the work, stop traveling and the like by operating the operator.

The server 202 is an information processing device such as a server device. The server 202 transmits, to the spraying machine 1, information such as a target route on which the spraying machine 1 automatically travels.

The spraying machine 1 can automatically travel (autonomously travel) along the preset target route. For example, the spraying machine 1 automatically travels along the target route, which includes multiple work routes and multiple movement routes, from a work start position to a work end position. Each of the multiple work routes may be a linear route on which the spraying machine 1 performs the work (spraying work) for the crops V1 which are the work target (spraying target), and each of the multiple movement routes may be a route on which the spraying machine 1 moves between the crop columns Vr1 without performing the spraying work and include a turning route and a straight-movement route.

Further, the spraying machine 1 automatically travels in a predetermined column order. In the example of Fig. 2, the spraying machine 1 travels with straddling the crop column Vr11, travels with straddling the crop column Vr12, and then, travels with straddling the crop column Vr13. In this manner, the spraying machine 1 automatically travels according to the order of crop columns Vr1 set in advance. The spraying machine 1 may travel for each column or for every two or more columns in the arrangement order of crop columns Vr1.

In the present embodiment, for the sake of convenience in description, the vertical direction in a state in which the spraying machine 1 can be used is defined as an up-down direction D1 as shown in Fig. 1. Further, the right-left direction D2 and the front-rear direction D3 are defined with reference to a direction viewed from the center point of the spraying machine 1 as viewed in plane. That is, a traveling direction of the spraying machine 1 when the spraying machine 1 moves forward is the front in the front-rear direction D3, and a traveling direction of the spraying machine 1 when the spraying machine 1 moves rearward is the rear in the front-rear direction D3. Note that these directions are not intended to limit the direction of use (direction upon use) of the spraying machine 1.

A term "parallel" as used in the present disclosure means that in addition to a case where two straight lines on one plane do not intersect with each other no matter how long these two straight lines are extended, i.e., a case where an angle between these two lines is precisely 0 degrees (or 180 degrees), the angle between these two lines falls within an error range of about several degrees (for example, less than 10 degrees) with respect to 0 degrees. Similarly, a term "perpendicular" as used in the present disclosure means that in addition to a case where the angle between the two lines is precisely 90 degrees, the angle between the two lines falls within an error range of about several degrees (for example, less than 10 degrees) with respect to 90 degrees.

### [2] Details of Spraying Machine

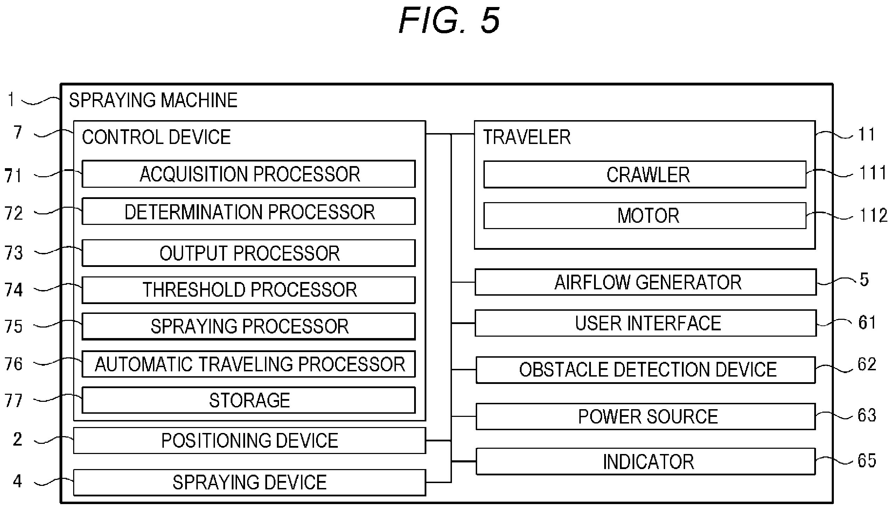

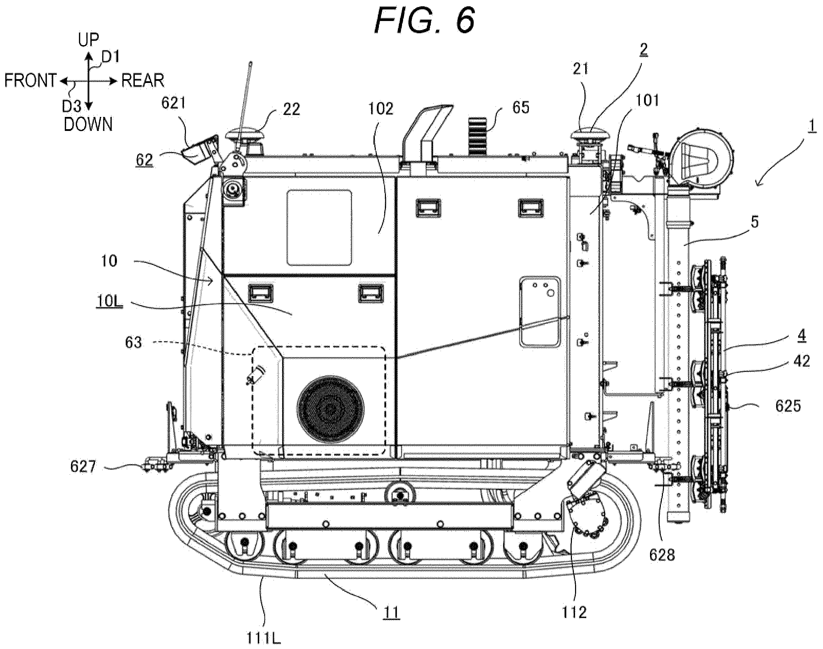

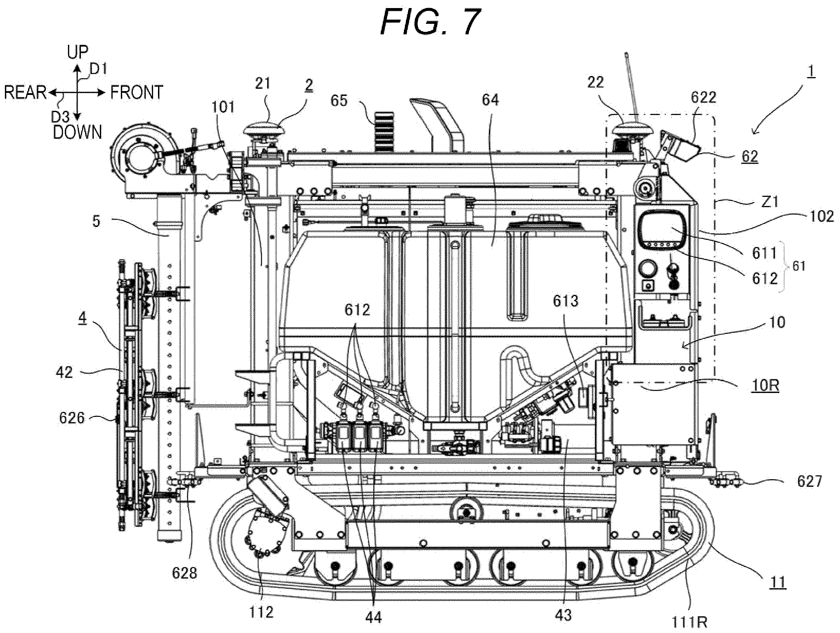

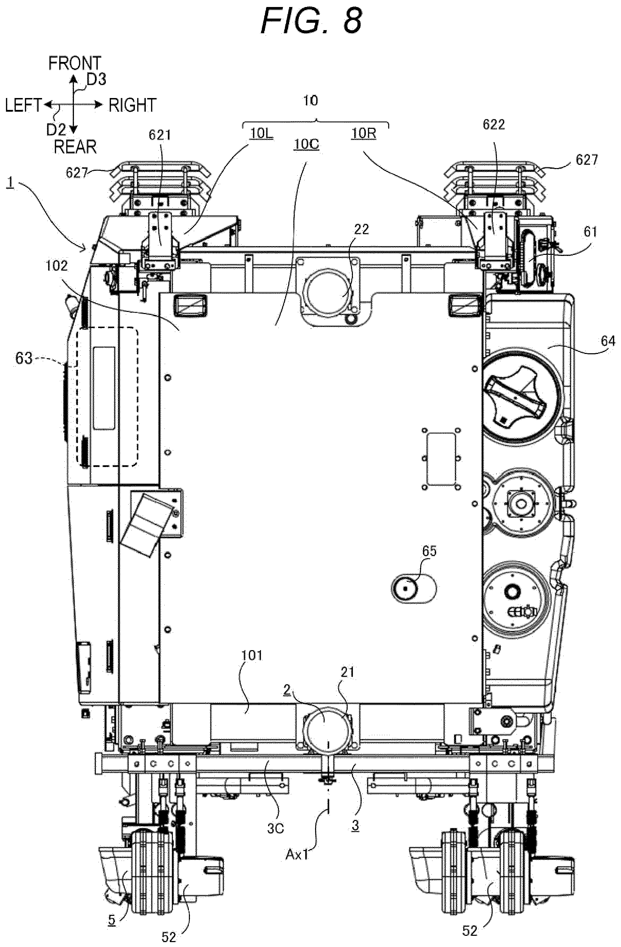

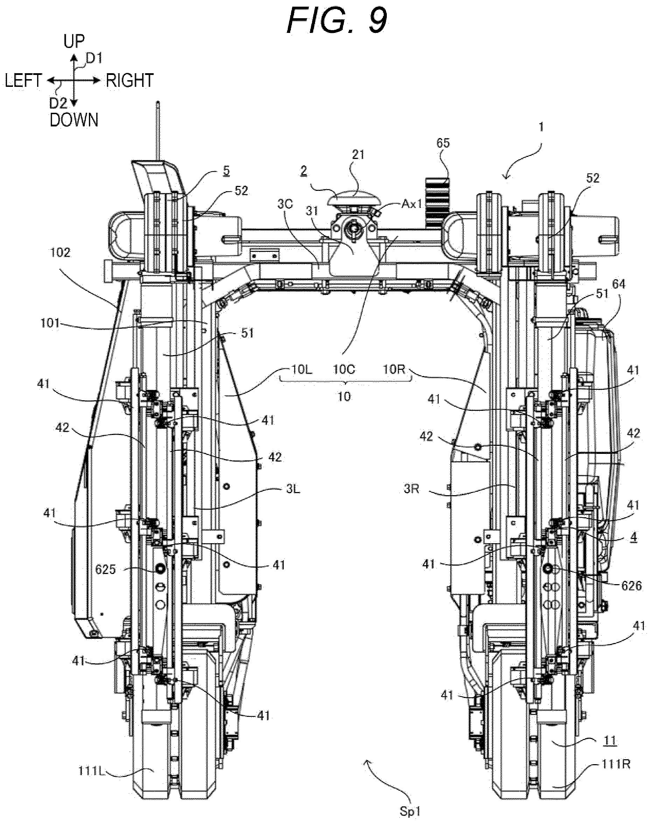

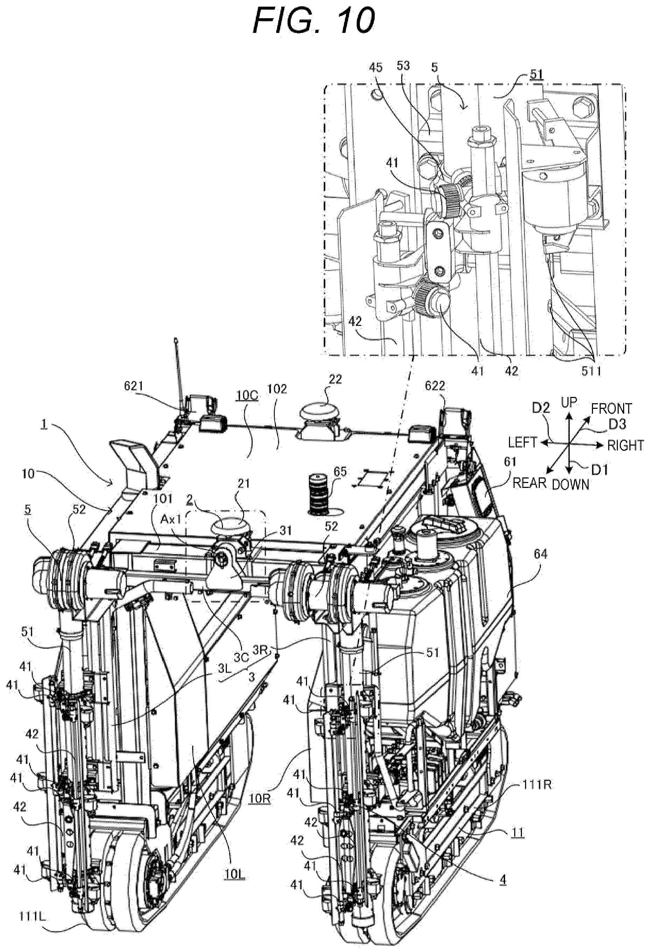

Next, the configuration of the spraying machine 1 will be described in more detail with reference to Figs. 1, 2, and 5 to 10. Fig. 1 is an external view of the spraying machine 1 from the front left side, and Fig. 2 is an external view of the spraying machine 1 from the back side (rear). Fig. 5 is a schematic block diagram showing a main configuration of the spraying machine 1. Fig. 6 is an external view of the spraying machine 1 from the left side, Fig. 7 is an external view of the spraying machine 1 from the right side, and Fig. 8 is an external view of the spraying machine 1 from above. Fig. 9 is an external view of the spraying machine 1 from the back side (rear). Fig. 10 is a schematic view showing the state of the spraying machine 1 obliquely from the rear, and shows a partially-enlarged view in a speech bubble-like portion.

The spraying machine 1 includes the machine body 10, the travelers 11, a support frame 3, and a spraying device 4. In the present embodiment, as shown in Fig. 5, the spraying machine 1 further includes the positioning device 2, a control device 7, an airflow generator 5, a user interface 61, an obstacle detection device 62, a power source 63, a tank 64 (see Fig. 7), an indicator 65, and the like. The spraying machine 1 further includes a communication terminal, a fuel tank, a battery and the like. In the present embodiment, the structure of the spraying machine 1, such as the machine body 10 and the support frame 3, is basically made of metal, and a material is selected according to required strength, weather resistance or the like. Note that the structure of the spraying machine 1 is not limited to that made of metal and, e.g., resin or wood may be appropriately used.

The machine body 10 is a main body of the spraying machine 1, and supports most of the components of the spraying machine 1, such as the positioning device 2 and the support frame 3. The machine body 10 has frames 101 (see Fig. 2) and covers 102. The frame 101 is a member forming the framework of the machine body 10, and supports heavy objects such as the power source 63 and the tank 64. The cover 102 is a member forming the outline of the machine body 10, and is attached to the frame 101 so as to cover at least part of the frame 101 and the members mounted on the frame 101. At the rear surface (back surface) and part of the right surface of the machine body 10, the frame 101 is not covered with the cover 102 and is exposed. The cover 102 is divided into multiple portions, and these multiple portions are individually detachable from the frame 101. Thus, e.g., only part of the cover 102 corresponding to some devices (members) such as the power source 63 is detachable, and therefore, some devices (members) such as the power source 63 can be exposed.

As described above, the machine body 10 has the first block 10L and the second block 10R arranged in the right-left direction D2. The first block 10L and the second block 10R face each other with an interval of a certain value or more therebetween in the right-left direction D2. As one example in the present embodiment, the first block 10L is positioned on the left side, and the second block 10R is positioned on the right side. Thus, the left portion of the machine body 10 is formed by the first block 10L, and the right portion of the machine body 10 is formed by the second block 10R. Further, the machine body 10 includes the coupling portion 10C that couples the first block 10L and the second block 10R to each other. In the front view (as viewed from the front), the coupling portion 10C has a length along the right-left direction D2, and each of the first block 10L and the second block 10R has a length along the up-down direction D1.

Here, the coupling portion 10C couples the upper end portions of the first block 10L and the second block 10R to each other. In other words, the first block 10L and the second block 10R each protrude downward from both end portions (in the right-left direction D2) of the coupling portion 10C. Thus, the first block 10L, the second block 10R, and the coupling portion 10C of the machine body 10 form the gate shape opened not only to both sides in the front-rear direction D3 but also to the lower side. In the machine body 10, the space Sp1 is formed, which is surrounded by the first block 10L, the second block 10R, and the coupling portion 10C on three sides and is opened in the front-rear direction D3.

In short, as shown in Fig. 2, the machine body 10 forms, between the first block 10L and the second block 10R, the space Sp1 through which the crop V1 (work target) targeted for the work (spraying work) by the spraying device 4 (worker) passes. Specifically, the dimensions of each component of the machine body 10 are set such that the space Sp1 is formed with a height and a width equal to or greater than the standard size of the crop V1 which is the spraying target. Thus, in the case of the crop V1 having the standard size, the machine body 10 allows the crop V1 to pass through the space Sp1 in a state in which the machine body 10 straddles the crop V1 with an interval of a predetermined value or more from the crop V1 so as not to contact the crop V1. While the crop V1 is passing through the space Sp1, the first block 10L is positioned at the left of the crop V1, the second block 10R is positioned at the right of the crop V1, and the coupling portion 10C is positioned above the crop V1.

More specifically, in the present embodiment, the machine body 10 is substantially symmetrical in the right-left direction D2. The first block 10L and the second block 10R are formed in the same rectangular shape with the substantially same size in the side view. Each of the first block 10L and the second block 10R has a flat shape in the right-left direction D2 such that the dimension in the right-left direction D2 is the smallest among the dimensions in the up-down direction D1, the right-left direction D2, and the front-rear direction D3. Of each of the first block 10L and the second block 10R, an upper portion with respect to the center in the up-down direction D1 is formed in such a tapered shape that the dimension in the right-left direction D2 decreases toward the upper end side. The coupling portion 10C is formed in such a rectangular shape that the dimension in the front-rear direction D3 is greater than that in the right-left direction D2 in the plan view. The coupling portion 10C has a flat shape in the up-down direction D1 such that the dimension in the up-down direction D1 is the smallest among the dimensions in the up-down direction D1, the right-left direction D2, and the front-rear direction D3.

As described above, the machine body 10 can be roughly divided into three portions (blocks) including the first block 10L, the second block 10R, and the coupling portion 10C. Each of the first block 10L, the second block 10R, and the coupling portion 10C has the frame 101 and the cover 102. In other words, each of the first block 10L and the second block 10R has the frame 101 and the cover 102. Further, most of the components of the spraying machine 1, such as the positioning device 2 and the support frame 3, are dispersedly provided at the first block 10L, the second block 10R, and the coupling portion 10C.

The traveler 11 is a traveling device (vehicle body) that causes the spraying machine 1 to travel, and is provided below the machine body 10. The traveler 11 allows the machine body 10 to travel (including turning) on the ground such that the spraying machine 1 is movable in the field F1 in the right-left direction D2 and the front-rear direction D3. Since the traveler 11 is provided for the machine body 10, the spraying machine 1 can perform the work (spraying work) while moving in the field F1.

The travelers 11 include the pair of crawlers (crawler tracks) 111L, 111R arranged in the right-left direction D2. The crawlers 111L, 111R are arranged with a certain interval therebetween in the right-left direction D2, and the space Sp1 through which the crop V1 which is the spraying target passes is formed between these crawlers 111L, 111R. That is, the left crawler 111L positioned at the left of the space Sp 1 and the right crawler 111R positioned at the right of the space Sp 1 face each other through the space Sp1. In a case where the left crawler 111L and the right crawler 111R are not particularly distinguished from each other, each of the crawlers 111L, 111R will also be merely referred to as a "crawler 111." The travelers 11 further include motors 112 that drive the crawlers 111. That is, the traveler 11 is a crawler type (crawler driven) traveling device that causes the spraying machine 1 to travel by driving the endless belt-shaped crawler 111 by the motor 112.

Here, at least two motors 112 are provided corresponding to the pair of crawlers 111L, 111R. The left motor 112 that drives the left crawler 111L and the right motor 112 that drives the right crawler 111R can individually drive the crawlers 111. As one example in the present embodiment, the motor 112 is a hydraulic motor (hydraulic actuator), and drives the crawler 111 using hydraulic oil supplied from a hydraulic pump. According to this configuration, even in a case where a road surface condition in the field F1 is rough, the machine body 10 can travel relatively stably.

Here, the crawler 111 and the motor 112 are provided below each of the first block 10L and the second block 10R. That is, the first block 10L has the left crawler 111L and the motor 112 that drives the crawler 111L, and the second block 10R includes the right crawler 111R and the motor 112 that drives the crawler 111R. In the present embodiment, the crawlers 111L, 111R are substantially symmetrical in the right-left direction D2, and the motors 112 are substantially symmetrical in the right-left direction D2. As described above, since the pair of travelers 11 is arranged apart from each other in the right-left direction D2 by the space Sp1, the spraying machine 1 can travel in a relatively-stable posture under various road surface conditions in the field F1, which include, e.g., a slope of which the height is lower on one side in the right-left direction D2.

Here, the pair of crawlers 111L, 111R is driven by power from the power source 63 in a state in which independent gear shift by a hydrostatic continuously variable transmission is allowed. Thus, the machine body 10 is brought into a forward-movement state in which the pair of crawlers 111L, 111R moves straight forward by being driven at a constant speed in a forward-movement direction, and is brought into a rearward-movement state in which the pair of crawlers 111L, 111R moves straight rearward by being driven at a constant speed in a rearward-movement direction. Moreover, the machine body 10 is brought into a forward-movement turning state in which the pair of crawlers 111L, 111R turns while moving forward by being driven at a non-constant speed in the forward-movement direction, and is brought into a rearward-movement turning state in which the pair of crawlers 111L, 111R turns while moving rearward by being driven at a non-constant speed in the rearward-movement direction. In addition, the machine body 10 is brought into a pivot turn state by driving one of the crawlers 111L, 111R while stopping the other one of the crawlers 111L, 111R, and is brought into a spin turn state by driving the pair of crawlers 111L, 111R at a constant speed in the forward-movement direction and the rearward-movement direction. Further, the machine body 10 is brought into a traveling stop state when the pair of crawlers 111L, 111R is stopped.

The power source 63 and the like are mounted on the first block 10L, and the tank 64 and the like are mounted on the second block 10R. As described above, the components of the spraying machine 1 are dispersedly arranged on the first block 10L and the second block 10R of the machine body 10, so that the spraying machine 1 can achieve its balance in the right-left direction D2 and have the lower center of gravity. As a result, the spraying machine 1 can stably travel on, e.g., a slope in the field F1.

As described above, the positioning device 2 is the device that detects the current position, current orientation and the like of the machine body 10. The positioning device 2 has at least the antenna 21. The antenna 21 receives, e.g., the GNSS signals transmitted from the satellites 204. That is, the antenna 21 includes a position specifying antenna for specifying the position of the machine body 10. Here, the antenna 21 is arranged on the upper surface (top surface) of the machine body 10 so as to easily receive the signals (GNSS signals) from the satellites 204. In other words, the antenna 21 is arranged at a position higher than the position of the highest portion of the machine body 10. Further, the positioning device 2 includes, e.g., a posture detector that detects the posture of the machine body 10.

In the present embodiment, the positioning device 2 further has an antenna 22 which is a second antenna in addition to the antenna 21 which is a first antenna. The positioning device 2 receives, e.g., the GNSS signals by each of these two antennas 21, 22. Here, the antenna 22 (second antenna) is arranged next to the antenna 21 (first antenna) in the front-rear direction D3. Thus, the positioning device 2 can transmit and receive the signals (e.g., the GNSS signals) via each of the antennas 21, 22. In particular, in a case where the antennas 21, 22 are the position specifying antennas, the current position can be specified at each of the front and rear portions of the machine body 10, and therefore, the orientation (current orientation) of the machine body 10 can be specified as well.

The support frame 3 is a member attached to one end portion of the machine body 10 in the front-rear direction D3 and supporting spraying nozzles 41 of the spraying device 4 as described later. In the present embodiment, the support frame 3 is attached to the rear end portion of the machine body 10. As in the machine body 10, the support frame 3 has a gate shape, and is arranged at a position overlapping with the machine body 10 in the back view (as viewed from the rear). That is, the support frame 3 includes a vertical frame 3L (first vertical frame) and a vertical frame 3R (second vertical frame) arranged in the right-left direction D2 and a horizontal frame 3C coupling the upper ends of the vertical frame 3L and the vertical frame 3R to each other. Thus, the support frame 3 has such a gate shape that the vertical frame 3L, the vertical frame 3R, and the horizontal frame 3C surround three sides of the space Sp1, i.e., the left, right, and top of the space Sp 1.

Specifically, the support frame 3 has the vertical frame 3L and the vertical frame 3R arranged in the right-left direction D2. The vertical frame 3L and the vertical frame 3R face each other with an interval of a certain value or more therebetween in the right-left direction D2. As one example in the present embodiment, the vertical frame 3L is positioned on the left side, and the vertical frame 3R is positioned on the right side. Thus, the vertical frame 3L is positioned at the rear of the first block 10L of the machine body 10, and the vertical frame 3R is positioned at the rear of the second block 10R of the machine body 10. In the back view (as viewed from the rear), the horizontal frame 3C has a length along the right-left direction D2, and each of the vertical frame 3L and the vertical frame 3R has a length along the up-down direction D1.

Here, the horizontal frame 3C couples the upper end portions of the vertical frame 3L and the vertical frame 3R to each other. In other words, the vertical frame 3L and the vertical frame 3R each protrude downward from both end portions (in the right-left direction D2) of the horizontal frame 3C. As described above, the support frame 3 includes the horizontal frame 3C having the length along the right-left direction D2 and the pair of vertical frames 3L, 3R each having the lengths along the up-down direction D1 and protruding downward from both end portions of the horizontal frame 3C. Thus, the vertical frame 3L, the vertical frame 3R, and the horizontal frame 3C of the support frame 3 form the gate shape opened not only to both sides in the front-rear direction D3 but also to the lower side. In the support frame 3, the space Sp1 is formed, which is surrounded by the vertical frame 3L, the vertical frame 3R, and the horizontal frame 3C on three sides and is opened in the front-rear direction D3.

In short, as shown in Fig. 2, the support frame 3 forms, between the vertical frames 3L, 3R, the space Sp1 through which the crop V1 (work target, spraying target) targeted for the work (spraying work) by the spraying device 4 (worker) passes. Specifically, the dimensions of each component of the support frame 3 are set such that the space Sp1 is formed with a height and a width equal to or greater than the standard size of the crop V1 which is the spraying target. Thus, in the case of the crop V1 having the standard size, the support frame 3 allows the crop V1 to pass through the space Sp1 in a state in which the support frame 3 straddles the crop V1 with an interval of a predetermined value or more from the crop V1 so as not to contact the crop V1. While the crop V1 is passing through the space Sp1, the vertical frame 3L is positioned at the left of the crop V1, the vertical frame 3R is positioned at the right of the crop V1, and the horizontal frame 3C is positioned above the crop V1.

More specifically, in the present embodiment, the support frame 3 is substantially symmetrical in the right-left direction D2. The vertical frame 3L and the vertical frame 3R have a cylindrical shape having a circular cross section. In the present embodiment, the vertical frame 3L and the vertical frame 3R are configured such that two cylindrical members are arranged next to each other. The horizontal frame 3C has a rectangular tubular shape having a rectangular cross section. Here, the vertical frame 3L and the vertical frame 3R are firmly fixed to the horizontal frame 3C by an appropriate fixing method such as a coupling fitting, a brace fitting, or welding. Thus, the vertical frame 3L and the vertical frame 3R are each maintained in a state of being perpendicular to the horizontal frame 3C. In other words, in the back view, a corner between the vertical frame 3L and the horizontal frame 3C and a corner between the vertical frame 3R and the horizontal frame 3C are a right angle.

In the present embodiment, the support frame 3 is supported by the machine body 10 so as to rotate about a rotation axis Ax1 while maintaining a relative positional relationship among the pair of vertical frames 3L, 3R and the horizontal frame 3C. The rotation axis Ax1 is an axis passing through a supporting point 31 on the horizontal frame 3C and extending along the front-rear direction D3. That is, the support frame 3 that supports the worker (spraying nozzles 41) is supported by the machine body 10 so as to rotate about the rotation axis Ax1 extending along the front-rear direction D3. Here, the term "rotation axis" as used in the present disclosure means a virtual axis (straight line) that is the center of rotational movement of a rotating body. That is, the rotation axis Ax1 is a not-physically-existing virtual axis. Note that the rotation axis Ax1 may be, for example, a physically-existing member such as a shaft pin.

The spraying device 4 includes the spraying nozzles 41 and the like. The spraying device 4 executes a spraying work of spraying the chemical solution which is the spraying material stored in the tank 64 to the crops V1 which are the spraying target. The spraying nozzle 41 is a component supported by the support frame 3 and spraying the spraying material. As one example in the present embodiment, the spraying nozzle 41 is a discharge port (sprayer) that actually serves as an outlet for the spraying material (chemical solution). The spraying device 4 has multiple spraying nozzles 41 (12 spraying nozzles as one example in the present embodiment).

The spraying device 4 has, in addition to the spraying nozzles 41, spraying tubes 42, a pump 43 (see Fig. 7), valves 44 (see Fig. 7), a spraying pipe, and the like. The spraying nozzle 41 is one example of the worker that executes the work (spraying work), and is supported by the support frame 3. Since the support frame 3 is supported by the machine body 10, the spraying nozzles 41 (workers) are indirectly supported by the machine body 10. In the present embodiment, the spraying nozzles 41 are attached to the spraying tube 42. The spraying tube 42 is connected to the pump 43 through the valve 44 by the spraying pipe. The pump 43 pumps the spraying material (chemical solution) stored in the tank 64 to the spraying tubes 42. The valve 44 is an electronically controlled valve unit such as an electromagnetic valve, and changes, e.g., a pressure (spraying pressure) and a spraying pattern when the spraying material is sprayed. Accordingly, the chemical solution in the tank 64 is supplied to the spraying nozzles 41 through the valves 44 and the spraying tubes 42 by the pump 43, and is sprayed from the spraying nozzles 41. Here, the chemical solution in the form of mist is discharged (sprayed) from the spraying nozzles 41.

More specifically, as shown in Figs. 9 and 10, the spraying tube 42 is a pipe having a length in the up-down direction D1, and two spraying tubes 42 are attached to each of the vertical frame 3L and the vertical frame 3R of the support frame 3. That is, in the present embodiment, the spraying device 4 includes four spraying tubes 42 in total. Two (pair of) spraying tubes 42 attached to each of the vertical frame 3L and the vertical frame 3R are arranged in the right-left direction D2. Each spraying tube 42 discharges the chemical solution, which is the spraying material injected from the upper end portion of the spraying tube 42, from three spraying nozzles 41 while the chemical solution is flowing downward in the tube. Three spraying nozzles 41 are attached to each spraying tube 42, and therefore, the spraying device 4 has 12 spraying nozzles 41 in total.

Each spraying nozzle 41 is attached to the corresponding spraying tube 42 such that the position thereof is changeable in the up-down direction D1. Thus, for each spraying nozzle 41, the interval between the spraying nozzles 41 adjacent to each other and the height position of the spraying nozzle 41 with respect to the spraying tube 42 are changeable according to the spraying target (crop V1). Each spraying nozzle 41 is attached such that the position thereof in the up-down direction D 1 and the right-left direction D2 with respect to the machine body 10 and the orientation (angle) thereof are changeable according to the spraying target. Note that in the spraying device 4, e.g., the number of spraying nozzles 41 provided for each spraying tube 42 can be appropriately changed according to, e.g., the type of spraying target (crop V1) or the length of each spraying tube 42.

The airflow generator 5 generates an airflow for delivering the spraying material (chemical solution) discharged from the spraying nozzles 41. The airflow generator 5 is supported by the support frame 3 together with the spraying nozzles 41. That is, the spraying machine 1 according to the present embodiment is an air-assist spraying machine that sprays the spraying material (chemical solution) using the airflow generated by the airflow generator 5. Thus, the spraying machine 1 can efficiently spray the spraying material (chemical solution) to the spraying target (crops V1) at a position relatively apart from the spraying nozzles 41.

The airflow generator 5 includes ducts 51 and blowers 52. The duct 51 forms a flow path in which air flows along the up-down direction D1. The blower 52 supplies air into the duct 51. In the airflow generator 5, air blown out from blow-out holes 511 (see Fig. 10) formed at the duct 51 form the airflow. In short, the airflow generator 5 generates the flow of air (airflow) flowing outward from the blow-out holes 511 by blowing out air sent into the duct 51 by the blower 52 from the blow-out holes 511 through the flow path in the duct 51. According to this configuration, a stable airflow can be generated across a relatively-wide area. Further, the airflow generator 5 can adjust the air volume of the airflow by controlling the blower 52. The airflow generator 5 can adjust a spraying material delivery distance by adjusting the air volume, and can deliver the spraying material to a farther location as the air volume increases. Thus, in the spraying machine 1 according to the present embodiment, a spraying material spraying area of the spraying device 4 can be adjusted.

More specifically, the duct 51 is a pipe having a length in the up-down direction D1, and one duct 51 is attached to each of the vertical frame 3L and the vertical frame 3R of the support frame 3. That is, in the present embodiment, the airflow generator 5 has two ducts 51 in total. At each duct 51, the multiple blow-out holes 511 are formed in a line along the up-down direction D 1 at each of the right and left surfaces of the duct 51. Two spraying tubes 42 of the spraying device 4 are fixed to each duct 51.

Here, the duct 51, two spraying tubes 42 attached thereto, and a total of six spraying nozzles 41 attached to these two spraying tubes 42 on one side in the right-left direction D2 are arranged symmetrical to the duct 51, two spraying tubes 42, and six spraying nozzles 41 on the other side in the right-left direction D2. Of these two spraying tubes 42, three spraying nozzles 41 provided for the left spraying tube 42 discharge the spraying material (chemical solution) toward the front left, and three spraying nozzles 41 provided for the right spraying tube 42 discharge the spraying material (chemical solution) toward the front right. Thus, the spraying material discharged in the form of mist from the left spraying nozzles 41 is delivered leftward by the airflow blown leftward from the duct 51, and the spraying material discharged in the form of mist from the right spraying nozzles 41 is delivered rightward by the airflow blown rightward from the duct 51.

Of the multiple (12) spraying nozzles 41, three spraying nozzles 41 provided for the leftmost spraying tube 42 spray the chemical solution leftward toward the crops V1 positioned at the outer left of the machine body 10. Of the multiple spraying nozzles 41, three spraying nozzles 41 provided for the inner left spraying tube 42 adjacent to the leftmost spraying tube 42 spray the chemical solution rightward toward the crops V1 positioned in the space Sp1 inside the machine body 10. Of the multiple spraying nozzles 41, three spraying nozzles 41 provided for the rightmost spraying tube 42 spray the chemical solution rightward toward the crops V1 positioned at the outer right of the machine body 10. Of the multiple spraying nozzles 41, three spraying nozzles 41 provided for the inner right spraying tube 42 adjacent to the rightmost spraying tube 42 spray the chemical solution leftward toward the crops V1 positioned in the space Sp1 inside the machine body 10.

With the above-described configuration, in the spraying device 4, two spraying tubes 42 and six spraying nozzles 41 provided for the vertical frame 3L of the support frame 3 function as a left spraying unit. Moreover, two spraying tubes 42 and six spraying nozzles 41 provided for the vertical frame 3R of the support frame 3 function as a right spraying unit. The right and left spraying units are arranged at the rear of the machine body 10 with an interval (space Sp1), which allows passage of the crop V1, therebetween in a state in which spraying in the right-left direction D2 is allowed.

The spraying device 4 is configured such that the multiple (12) spraying nozzles 41 are divided into multiple systems and each system is controllable. As one example in the present embodiment, six spraying nozzles 41 provided for two inner spraying tubes 42 of four spraying tubes 42 in the right-left direction D2 are classified into a first system, three spraying nozzles 41 provided for the leftmost spraying tube 42 are classified into a second system, and three spraying nozzles 41 provided for the rightmost spraying tube 42 are classified into a third system. Thus, the spraying pattern of the spraying device 4 includes an entire spraying pattern in which the spraying material (chemical solution) is sprayed from all the spraying nozzles 41 and a limited spraying pattern in which a spraying direction is limited. The limited spraying pattern includes a first spraying pattern in which the spraying material is sprayed only from the six spraying nozzles 41 of the first system, a second spraying pattern in which the spraying material is sprayed only from the three spraying nozzles 41 of the second system, and a third spraying pattern in which the spraying material is sprayed only from the three spraying nozzles 41 of the third system. The limited spraying pattern further includes a fourth spraying pattern in which the spraying material is sprayed only from the nine spraying nozzles 41 of the first system and the second system, a fifth spraying pattern in which the spraying material is sprayed only from the nine spraying nozzles 41 of the first system and the third system, and a sixth spraying pattern in which the spraying material is sprayed only from the six spraying nozzles 41 of the second system and the third system.

The spraying device 4 is controlled by the control device 7, and is appropriately switched among the above-described multiple spraying patterns (the entire spraying pattern and a total of six limited spraying patterns). At least the valve 44 of the spraying device 4 is provided for each system of the multiple spraying nozzles 41, and in the present embodiment, three valves 44 are provided corresponding to the three systems (first system, second system, and third system). The multiple (three in this embodiment) valves 44 are individually controlled by the control device 7 to change the spraying pattern. The spraying device 4 can also change the spraying material spraying area by changing the pressure (spraying pressure) upon spraying of the spraying material for each system. Further, in the present embodiment, the spraying material spraying area can also be adjusted in such a manner that the air volume of the airflow generator 5 is adjusted, so that more various spraying areas can be achieved according to the spraying target (crops V1) or the spraying material (chemical solution). The configuration of the spraying device 4 will be described in more detail in the section of "[3] Configuration of Spraying Device."

In the present embodiment, the support frame 3 is not fixed relative to the machine body 10, but is rotatable about the rotation axis Ax1, as described above. When the support frame 3 rotates, the multiple spraying nozzles 41 supported by the support frame 3 also rotate about the rotation axis Ax1.

The spraying machine 1 according to the present embodiment does not include, e.g., an actuator that actively rotates the support frame 3. Thus, the support frame 3 rotates only when external force acts on the support frame 3. For example, when the machine body 10 travels on the slope, the support frame 3 rotates by the weight of the support frame 3 itself, i.e., the force of gravity acting on the support frame 3. If the support frame 3 and the members (e.g., the spraying nozzles 41, the spraying tubes 42, and the airflow generator 5) supported by the support frame 3 are in such a weight balance that these components are symmetrical in the right-left direction D2, the support frame 3 is maintained at a neutral position as long as the machine body 10 is kept horizontal.

According to the rotatable support frame 3 described above, for example, while the machine body 10 is traveling on the slope, the support frame 3 rotates, and therefore, unevenness (unevenness in spraying) in the amount of spraying material (chemical solution) sprayed by the spraying nozzle 41 is less likely to be caused. Assuming that the support frame 3 is fixedly supported by the machine body 10, if the machine body 10 tilts while traveling on the slope, a distance from the spraying nozzle 41 is different between the upper and lower portions of the crop V1 (spraying target) extending straight in the vertical direction from the ground surface (field F1), leading to a probability that the unevenness in the amount of spraying material sprayed is caused. On the other hand, in the spraying machine 1 according to the present embodiment, when the support frame 3 rotates, the support frame 3, the spraying nozzles 41 supported by the support frame 3, and the like can be maintained in the same posture as that while traveling on the horizontal plane. Thus, for the crop V1 (spraying target) extending straight in the vertical direction from the ground surface (field F1), the distance from the spraying nozzle 41 is less likely to be different between the upper and lower portions of the crop V1, and the unevenness in the amount of spraying material sprayed is easily reduced.

The user interface 61 is a device that performs at least one of output of information to the user or acceptance of operation. Here, the user interface 61 has, as shown in Fig. 7, a display 611 that displays various types of information, such as a liquid crystal display or an organic EL display, and an operator 612 that receives operation, such as a touch panel, a knob, or a push button switch. The operating person, who is one example of the user, can operate the operator 612 to perform various settings according to an operation screen displayed on the display 611. Specifically, the operating person operates the operator 612 of the user interface 61 to set, e.g., an operation condition for the spraying device 4. Examples of the operation condition for the spraying device 4 include a pressure (spraying pressure) and a flow rate upon spraying of the spraying material from the spraying nozzle 41.

The obstacle detection device 62 includes a first sensor 621, a second sensor 622, a third sensor 623, and a fourth sensor 624. Any of the first to fourth sensors 621 to 624 is arranged to face the front of the machine body 10. The first sensor 621 is arranged at the front left end portion of the upper surface of the machine body 10, the second sensor 622 is arranged at the front right end portion of the upper surface of the machine body 10, the third sensor 623 is arranged at the front surface of the first block 10L, and the fourth sensor 624 is arranged at the front surface of the second block 10R. The obstacle detection device 62 further includes a fifth sensor 625 (see Fig. 6) and a sixth sensor 626 (see Fig. 7). Any of the fifth sensor 625 and the sixth sensor 626 is arranged to face the rear of the machine body 10. The fifth sensor 625 is attached to the vertical frame 3L, and the sixth sensor 626 is attached to the vertical frame 3R.

Each of the first to sixth sensors 621 to 626 includes, for example, a sensor such as an image sensor (camera), a sonar sensor, a radar, or a light detection and ranging (LiDAR), and senses a status around the machine body 10. As one example in the present embodiment, each of the first to sixth sensors 621 to 626 is a three-dimensional sensor that measures a distance to each distance measurement point (measurement target) in a measurement area by a time of flight (TOF) method for measuring the distance to the distance measurement point based on a round-trip time until light or sound returns after having reached the distance measurement point. The status around the machine body 10 includes, for example, the presence or absence of an object (e.g., obstacle) existing at the front of the machine body 10 in the traveling direction thereof and the position (distance and orientation) of the object.

The obstacle detection device 62 further includes front contact sensors 627 and rear contact sensors 628. The pair of right and left front contact sensors 627 is arranged on the front side of the machine body 10, and the pair of right and left rear contact sensors 628 is arranged on the rear side of the machine body 10. Each of the front contact sensor 627 and the rear contact sensor 628 detects an obstacle upon contact with the obstacle. Each sensor transmits a detection signal to the control device 7 when the obstacle is detected.

The power source 63 is a drive source that supplies power at least to the traveler 11. The power source 63 has an engine such as a diesel engine. The power source 63 drives the hydraulic pump to supply hydraulic oil from the hydraulic pump to, e.g., the motor 112 of the traveler 11, thereby driving, e.g., the traveler 11.

The tank 64 stores the spraying material such as the chemical solution. The spraying material stored in the tank 64 is supplied to the spraying device 4, and is sprayed from the spraying nozzles 41 of the spraying device 4. The tank 64 can be refilled with the chemical solution, which is the spraying material, from the outside. The capacity of the tank 64 is, for example, about 200 L.

The indicator 65 is arranged on the upper surface of the machine body 10. As one example, the indicator 65 is formed in a columnar shape having a length in the up-down direction D 1. A lighting state of the indicator 65 changes according to an operation state (e.g., a traveling state and a spraying work execution state) of the spraying machine 1. Thus, the operation state of the spraying machine 1 can be visually recognized even from the periphery of the spraying machine 1.

The control device 7 mainly includes, for example, a computer system having one or more processors such as a central processing unit (CPU) and one or more memories such as a read only memory (ROM) or a random access memory (RAM), and executes various types of processing (information processing). In the present embodiment, the control device 7 is an integrated controller that controls the entire spraying machine 1, and includes, for example, an electronic control unit (ECU). Note that the control device 7 may be provided separately from the integrated controller or may mainly include one or more processors.

As shown in Fig. 5, the control device 7 includes an acquisition processor 71, a determination processor 72, an output processor 73, a threshold processor 74, a spraying processor 75, an automatic traveling processor 76, and a storage 77. As one example in the present embodiment, the control device 7 mainly includes the computer system having one or more processors, and therefore, these multiple functions (the acquisition processor 71 and the like) are implemented by execution of control programs by one or more processors. These multiple functions included in the control device 7 may be dispersedly provided for multiple housings, or may be provided for one housing.

The control device 7 is communicable with the device provided for each unit of the machine body 10. That is, at least the traveler 11, the positioning device 2, the spraying device 4, the airflow generator 5, the user interface 61, the obstacle detection device 62, the power source 63, the indicator 65 and the like are connected to the control device 7. Thus, the control device 7 can control the traveler 11, the spraying device 4 and the like, and acquire electric signals from the positioning device 2, the obstacle detection device 62, and the like. The control device 7 may directly exchange various types of information (data) with each device, or may indirectly exchange various types of information (data) with each device via, e.g., a repeater.

In addition to the above-described functions, the control device 7 further includes an engine controller, a hydro-static transmission (HST) controller that performs control related to the hydrostatic continuously variable transmission, and the like. The engine controller controls the engine (power source 63). The HST controller performs the control related to the hydrostatic continuously variable transmission.

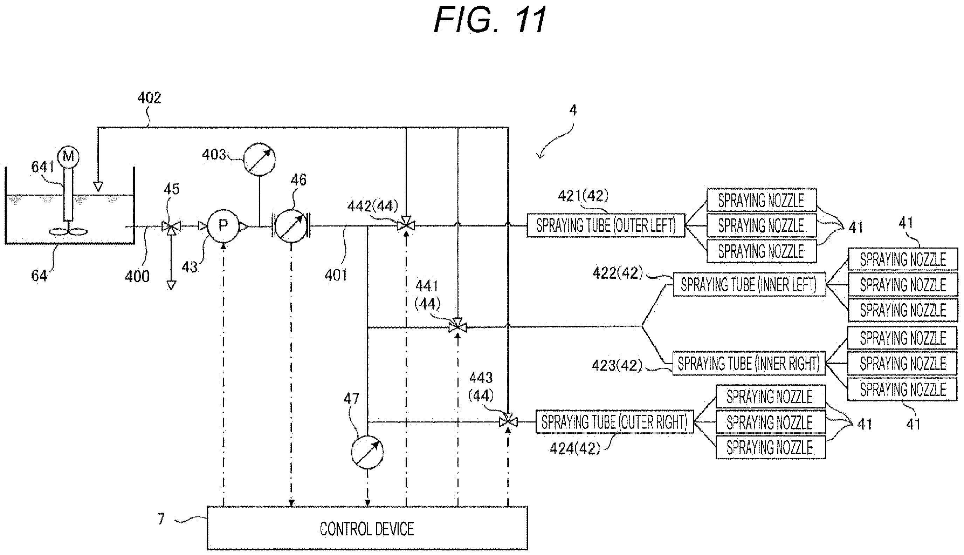

The acquisition processor 71 executes acquisition processing of acquiring the electric signal (including the data) from each device. In the present embodiment, the acquisition processor 71 acquires a detection signal at least from a later-described pressure sensor 47 (see Fig. 11) of the spraying device 4. The pressure sensor 47 is provided in a supply path 401 (see Fig. 11) for supplying the spraying material (chemical solution) to the multiple spraying nozzles 41, and detects a pressure (pressure of the spraying material in the supply path 401) in the supply path 401 to output the detection signal indicating a detection result (pressure). In addition, the acquisition processor 71 acquires remaining amount information regarding the remaining amount of the spraying material (chemical solution) stored in the tank 64 from a level sensor provided in the tank 64. Further, the acquisition processor 71 acquires position information regarding the current position of the machine body 10 from the positioning device 2.

The determination processor 72 determines whether or not a monitoring target has been clogged, taking at least some of the multiple spraying nozzles 41 as the monitoring target. That is, in some cases, at least some of the multiple (12 in the present embodiment) spraying nozzles 41 of the spraying device 4 are clogged. The term "clogging" as used herein means that, for example, a component or other foreign substances in the spraying material (chemical solution) adhere(s) to the spraying nozzle 41 and accordingly, the spraying material does not pass smoothly through the spraying nozzle 41. In a case where a filter is attached to the spraying nozzle 41, clogging in the filter may cause clogging in the spraying nozzle 41. That is, the case where the spraying nozzle 41 is clogged includes a case where the spraying nozzle 41 does not spray the spraying material at all and a case where the amount of spraying material sprayed from the spraying nozzle 41 has decreased. As one example in the present embodiment, the determination processor 72 takes all the multiple spraying nozzles 41 as the monitoring target, and determines that the monitoring target has been clogged if any of the multiple (12 in this embodiment) spraying nozzles 41 which are the monitoring target has been clogged.

In the present embodiment, the determination processor 72 determines that the monitoring target has been clogged if the pressure in the supply path 401 for supplying the spraying material to the monitoring target satisfies a determination condition. That is, basically, if the spraying nozzle 41 has been clogged, the amount of spraying material (chemical solution) to be discharged from the spraying nozzle 41 decreases, and accordingly, the pressure in the supply path 401 increases. Thus, the determination processor 72 determines, based on the detection signal of the pressure sensor 47 acquired by the acquisition processor 71, whether or not the pressure (the pressure of the spraying material in the supply path 401) in the supply path 401 satisfies the determination condition, and determines that clogging has occurred if the determination condition is satisfied. The "determination condition" described herein is, for example, a condition where the pressure in the supply path 401 is a predetermined pressure or more, a condition where a state in which the pressure is the predetermined pressure or more continues for a predetermined time, a condition where the fluctuation range of the pressure in the supply path 401 is a predetermined range or more, or a combination thereof. As one example in the present embodiment, the determination condition is the condition where the pressure in the supply path 401 is the predetermined pressure or more. That is, the determination processor 72 determines that the monitoring target has been clogged if the pressure in the supply path 401 is the predetermined pressure, which is a determination threshold, or more.

The output processor 73 executes output processing of outputting various types of information according to the determination result of the determination processor 72. In the present embodiment, the output processor 73 outputs at least clogging position information regarding the position of the machine body 10 when the monitoring target is clogged. That is, in a case where the determination processor 72 has determined that any of the spraying nozzles 41 has been clogged while the machine body 10 is traveling on a certain point in the field F 1, the output processor 73 outputs information (clogging position information) regarding the point. Here, the form of the output from the output processor 73 may be, e.g., writing in a non-transitory recording medium such as the storage 77, indication on the indicator 65, output of warning sound, transmission to another terminal, or a combination thereof.

The threshold processor 74 executes threshold setting processing of setting the determination threshold used for determination by the determination processor 72. In the present embodiment, since the determination condition is the condition where the pressure in the supply path 401 is the predetermined pressure or more, the "predetermined pressure" to be compared with the pressure in the supply path 401 is one example of the determination threshold. Note that the present disclosure is not limited to this example, and for example, in a case where the determination condition is the condition where the state in which the pressure in the supply path 401 is the predetermined pressure or more continues for the predetermined time, at least one of the "predetermined pressure" or the "predetermined time" is the determination threshold. In a case where the determination condition is the condition where the fluctuation range of the pressure in the supply path 401 is the predetermined range or more, the "predetermined range" is the determination threshold.

Here, the threshold processor 74 can manually set the determination threshold according to operation on, e.g., the user interface 61 by the user (operating person), for example. As one example, in a case where the user gives priority to the man-hours (time required for the spraying work) of the spraying work, the user sets the determination threshold high, and accordingly, it is less likely to determine that the monitoring target has been clogged. Conversely, in a case where the user gives priority to the reliability (spraying amount) of the spraying work, the user sets the determination threshold low, and accordingly, it is more likely to determine that the monitoring target has been clogged. That is, the threshold processor 74 sets, according to user's operation, the determination threshold used when it is determined whether or not the monitoring target has been clogged. Thus, the user can arbitrarily set the sensitivity of determination on clogging, i.e., the degree of clogging leading to determination that clogging has occurred.

The threshold processor 74 may automatically set the determination threshold, for example, according to the status (operation status) of the spraying machine 1. Here, the status of the spraying machine 1 is the current position (including a position on the target route) of the spraying machine 1 or the remaining amount of the spraying material, for example. As one example, in a case where a distance from the current position of the spraying machine 1 to an automatic traveling end position is short, the threshold processor 74 sets the determination threshold high, and accordingly, it is less likely to determine that the monitoring target has been clogged. Conversely, in a case where the distance from the current position of the spraying machine 1 to the automatic traveling end position is long, the threshold processor 74 sets the determination threshold low, and accordingly, it is more likely to determine that the monitoring target has been clogged. That is, the threshold processor 74 sets, according to the status of the spraying machine 1, the determination threshold used when it is determined whether or not the monitoring target has been clogged. Thus, an appropriate determination threshold can be automatically set according to the status of the spraying machine 1.

The spraying processor 75 performs spraying control processing related to the work (spraying work) by, e.g., the spraying device 4 and the airflow generator 5. Specifically, when the spraying machine 1 starts automatically traveling from the work start position, the spraying processor 75 outputs, to the spraying device 4, a switching signal for switching the spraying pattern based on control information included in the preset target route. When receiving the switching signal, the spraying device 4 executes the spraying work in a predetermined spraying pattern. Thus, the multiple spraying nozzles 41 of the spraying device 4 spray the spraying material at least during automatic traveling of the machine body 10.

Here, in the spraying machine 1 according to the present embodiment, the spraying processor 75 operates according to the determination result of the determination processor 72. Specifically, in a case where the determination processor 72 determines that the monitoring target has been clogged during a work of spraying the spraying material (chemical solution) by the spraying device 4, the spraying processor 75 causes the spraying device 4 to stop the spraying material spraying work. That is, in a case where the monitoring target has been clogged, the spraying processor 75 stops spraying of the spraying material.

The automatic traveling processor 76 causes the machine body 10 to automatically travel along the target route in the field F1 based on, e.g., the positioning information acquired from the positioning device 2. Specifically, the automatic traveling processor 76 causes the travelers 11 to automatically travel along the target route based on the positioning information including the position and orientation of the machine body 10 measured by the positioning device 2. For example, when the positioning information is acquirable by RTK positioning and the operating person clicks a start button (automatic traveling start instruction) on the operation screen of the operation terminal 201, the operation terminal 201 outputs the automatic traveling start instruction (work start instruction) to the spraying machine 1. When acquiring the automatic traveling start instruction from the operation terminal 201, the automatic traveling processor 76 causes the spraying machine 1 to start automatically traveling based on the positioning information measured on the machine body 10 by the positioning device 2. Accordingly, the spraying machine 1 starts automatically traveling along the target route, and starts the spraying work using the spraying device 4.

The storage 77 is, for example, a non-transitory recording medium including, e.g., a RAM or an external memory, and stores various types of information. In the present embodiment, the form of the output from the output processor 73 includes at least writing (of the clogging position information) in the storage 77. Thus, the storage 77 stores at least the information (clogging position information) regarding the current position of the machine body 10 when the spraying nozzle 41 which is the monitoring target is clogged. In addition, the storage 77 stores a log related to the determination result of the determination processor 72, such as the time of occurrence of clogging in the spraying nozzle 41 and the number of times of occurrence of clogging. Further, the storage 77 also stores information used for automatic traveling of the spraying machine 1, such as the target route.

The communication terminal is a communication interface for connecting the spraying machine 1 to a communication network in a wired or wireless manner and executing data communication with external equipment such as the operation terminal 201 or the server 202 according to a predetermined communication protocol via the communication network. Electronic devices such as the positioning device 2, the control device 7, and a communication device are connected to the battery, and can operate even while the power source 63 is stopped.

### [3] Configuration of Spraying Device

Next, the configuration of the spraying device 4 of the spraying machine 1 according to the present embodiment will be described in more detail with reference to Fig. 11. Fig. 11 schematically shows the configuration of the spraying device 4. In Fig. 11, a solid line indicates a path (flow path) in which the spraying material (chemical solution) passes, and an arrow of a chain line indicates a path for the electric signal.

In the spraying machine 1 according to the present embodiment, the spraying device 4 has the multiple (12) spraying nozzles 41, the four spraying tubes 42, the pump 43, the three valves 44, the spraying pipe, and the like, as described above. The spraying device 4 further includes a water stop drain valve 45, a discharge-side flowmeter 46, the pressure sensor 47, a pressure gauge 403, and the like. In Fig. 11, a filter, a manual adjustment valve, and the like provided for the spraying pipe are omitted appropriately.

The four spraying tubes 42 include a first spraying tube 421 (outer left) positioned at the leftmost end, a second spraying tube 422 (inner left) positioned on the inner left side, a third spraying tube 423 (inner right) positioned on the inner right side, and a fourth spraying tube 424 (outer right) positioned at the rightmost end. Each of these first to fourth spraying tubes 421 to 424 is provided with three spraying nozzles 41, and the spraying material (chemical solution) supplied to each spraying tube 42 is sprayed (discharged) from these three spraying nozzles 41 provided for such a spraying tube 42. The six spraying nozzles 41 provided for the second spraying tube 422 and the third spraying tube 423 are classified into the first system, three spraying nozzles 41 provided for the first spraying tube 421 are classified into the second system, and three spraying nozzles 41 provided for the fourth spraying tube 424 are classified into the third system.

Here, the spraying pipe includes a tank path 400 which is a path (flow path) for the spraying material from the tank 64 to the pump 43, the supply path 401 which is the path (flow path) for the spraying material from the pump 43 to the spraying tube 42, and a return path 402 which is a path (flow path) for the spraying material from the supply path 401 to the tank 64. That is, in the present embodiment, the supply path 401 serving as a path on a spraying material discharge side and the return path 402 serving as a path on a spraying material return side are provided in parallel between the tank 64 and the spraying tube 42. The supply path 401 is branched in the middle from one pump 43 into the three systems, and is connected to the three systems of the spraying tubes 42. On the other hand, branches of the return path 402 for the three systems are connected to the branches of the supply path 401 for the three systems, and are joined together and connected to one tank 64.

The tank path 400 is provided with the water stop drain valve 45. The water stop drain valve 45 can block between the tank 64 and the pump 43 to discharge (drain) the spraying material from the tank 64 to the outside. The pump 43 is electrically connected to the control device 7, and is controlled by the control device 7 (spraying processor 75). On the other hand, the discharge-side flowmeter 46 is provided in the supply path 401 on the discharge side of the pump 43. The discharge-side flowmeter 46 detects the flow rate of spraying material (chemical solution) discharged from the pump 43. The discharge-side flowmeter 46 is, as one example, an electromagnetic flowmeter, and outputs a flow rate signal indicating a detection result to the control device 7 (acquisition processor 71). The pressure gauge 403 is, as one example, an analog gauge, and is provided in the supply path 401 on the discharge side of the pump 43. The pressure gauge 403 is arranged between the pump 43 and the discharge-side flowmeter 46, and displays the pressure of spraying material discharged from the pump 43 (pressure in the supply path 401).

The three valves 44 are each provided for the systems of the multiple spraying nozzles 41 as described above, and in the present embodiment, correspond to the three systems (first system, second system, and third system). These multiple (three) valves 44 are individually controlled by the control device 7 (spraying processor 75) to change the spraying pattern. That is, the three valves 44 include a first valve 441 provided in the branch path of the supply path 401 connected to the spraying tubes 42 (422, 423) of the first system, a second valve 442 provided in the branch path of the supply path 401 connected to the spraying tube 42 (421) of the second system, and a third valve 443 provided in the branch path of the supply path 401 connected to the spraying tube 42 (424) of the third system. Each valve 44 is a three-way solenoid valve that alternatively connects the supply path 401 connected to the pump 43 to the spraying tube(s) 42 or the return path 402. These first to third valves 441 to 443 are electrically connected to the control device 7, and are individually controlled by the control device 7 (spraying processor 75).

The pressure sensor 47 detects the pressure in the supply path 401 in which the spraying material (chemical solution) is discharged from the pump 43. The pressure sensor 47 outputs a pressure signal indicating a detection result to the control device 7 (acquisition processor 71). The pressure sensor 47 is provided downstream of the discharge-side flowmeter 46 and upstream of the three valves 44 in the supply path 401. That is, the pressure sensor 47 is directly connected to the branch point of the supply path 401 for the three systems, and detects the pressure of the spraying material at the branch point. Thus, the pressure in the supply path 401 branched into the paths for the multiple systems (the three systems in the present embodiment) can be detected by one pressure sensor 47.

In addition, as shown in Fig. 11, a stirring device 641 that stirs the spraying material (chemical solution) in the tank 64 may be provided in the tank 64. The stirring device 641 is driven by a motor to execute a work of stirring the spraying material. Accordingly, the concentration of the spraying material is likely to be uniform, and the spraying nozzle 41 is less likely to be clogged.

According to the above-described configuration, for the spraying device 4, the spraying pattern is changed by control of the first to third valves 441 to 443 in a state in which the water stop drain valve 45 is opened and the pump 43 is driven. For example, in a state in which all the first to third valves 441 to 443 connect the supply path 401 to the spraying tubes 42, the spray pattern is the entire spraying pattern in which the spraying material (chemical solution) is sprayed from all the spraying nozzles 41. On the other hand, in a state in which only the first valve 441 of the first to third valves 441 to 443 connects the supply path 401 to the spraying tubes 42, the spray pattern is the first spraying pattern in which the spraying material is sprayed only from the six spraying nozzles 41 of the first system. In a state in which all the first to third valves 441 to 443 connect the supply path 401 to the return path 402, spraying of the spraying material (chemical solution) from all the spraying nozzles 41 is stopped.

Of the spraying material supplied from the pump 43 to the supply path 401, the spraying material which is not sprayed from the spraying tubes 42 is returned to the tank 64 through the return path 402. For example, in a state in which all the first to third valves 441 to 443 connect the supply path 401 to the spraying tubes 42, the amount of spraying material returned to the tank 64 is 0 (zero). On the other hand, in a state in which only the first valve 441 of the first to third valves 441 to 443 connect the supply path 401 to the spraying tubes 42, the spraying material flowing through the second and third valves 442, 443 is returned to the tank 64 through the return path 402. In a state in which all the first to third valves 441 to 443 connect the supply path 401 to the return path 402, the spraying material supplied from the pump 43 to the supply path 401 is all returned to the tank 64 through the return path 402. Thus, in a normal state, the detection result of the pressure sensor 47, i.e., the pressure in the supply path 401 (at the branch point into the three systems) is constant regardless of the spraying pattern.

### [4] Method for Controlling Spraying Machine

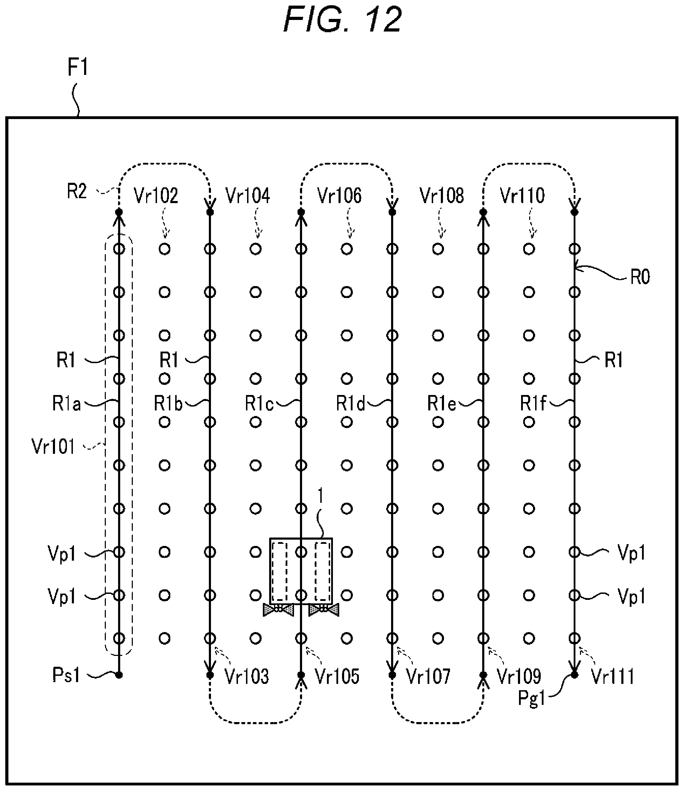

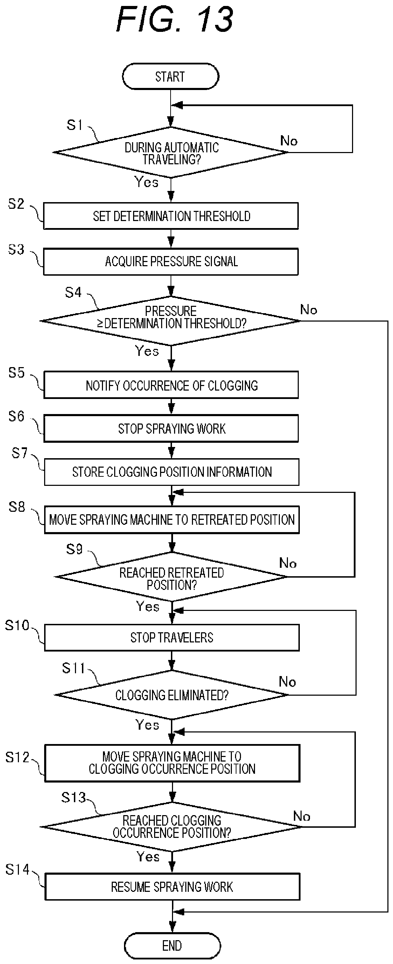

Hereinafter, one example of a method (hereinafter, merely referred to as a "control method") for controlling the work machine (spraying machine 1), which is mainly executed by the control device 7, will be described with reference to Figs. 12 and 13. Fig. 12 is a view for describing one example of a target route R0 for automatic traveling. Fig. 13 is a flowchart showing one example of processing particularly related to determination on clogging in the spraying nozzle 41 in the control method according to the present embodiment. Note that the flowchart shown in Fig. 13 is merely one example, and a processing step may be appropriately added or omitted or the order of processing steps may be appropriately changed.

The control method according to the present embodiment is executed by the control device 7 mainly including the computer system. In other words, the control method is embodied by the control program (hereinafter, merely referred to as a "control program") of the work machine (the spraying machine 1). That is, the control program according to the present embodiment is a computer program for causing one or more processors to execute each type of processing related to the control method. Such a control program may be executed in cooperation by the control device 7 and the operation terminal 201, for example.

Hereinafter, a situation will be assumed, in which the spraying machine 1 performs a work of spraying the spraying material (chemical solution) while automatically traveling. Note that it is assumed that, for example, the operating person manually operates the spraying machine 1 to travel up to a start position (automatic traveling start position Ps1) of automatic traveling in the field F1. For example, the operating person transports the spraying machine 1 from a storage (e.g., barn) to the field F1 using a transport vehicle, manually operates the spraying machine 1 to travel to the automatic traveling start position Ps1 in the field F1, and then, causes the spraying machine 1 to start automatically traveling.

### Overall Processing Related to Automatic Traveling

For example, the spraying machine 1 can automatically travel (autonomously travel) along the target route R0 set in advance for the field F1, as shown in Fig. 12. That is, the spraying machine 1 automatically travels along the target route R0 including work routes R1 (work routes R1a to R1f) and movement routes R2 from the automatic traveling start position Ps1 to an automatic traveling end position Pg1. The automatic traveling start position Ps 1 is the start of the target route R0, and is one example of the work start position of the spraying work by the spraying machine 1. The automatic traveling end position Pg1 is the end of the target route R0, and is one example of the work end position of the spraying work by the spraying machine 1. The work route R1 is a linear path on which the spraying machine 1 performs the spraying work for the crops V1, and the movement route R2 is a path on which the spraying machine 1 moves between the crop columns Vr1 without performing the spraying work. The movement route R2 includes, for example, a turning route and a straight-movement route. In the example shown in Fig. 12, crops V1 forming crop columns Vr101 to Vr111 are arranged in the field F1. In Fig. 12, a position (crop position) at which the crop V1 is planted is indicated by "Vp1."

Further, the spraying machine 1 automatically travels in a predetermined column order. For example, the spraying machine 1 travels with straddling the crop column Vr101, travels with straddling the crop column Vr103, and then, travels with straddling the crop column Vr105. In this manner, the spraying machine 1 automatically travels according to the order of crop columns Vr1 set in advance. The spraying machine 1 may travel for each column or for every two or more columns in the arrangement order of crop columns Vr1.

Specifically, the automatic traveling processor 76 of the control device 7 causes the travelers 11 to start automatically traveling by acquiring the automatic traveling start instruction (work start instruction) from the operation terminal 201 in a state in which the spraying machine 1 is at the automatic traveling start position Ps1. For example, when the operating person manually operates the spraying machine 1 to travel to the automatic traveling start position Ps1 based on traveling instruction operation on, e.g., an operation device for manual operation by the operating person and then clicks the start button on the operation terminal 201, the operation terminal 201 outputs the automatic traveling start instruction to the spraying machine 1.

The automatic traveling processor 76 of the control device 7 acquires the automatic traveling start instruction and route data from the operation terminal 201, and executes automatic traveling along the target route R0 according to the route data. At this time, the automatic traveling processor 76 stores the route data acquired from the operation terminal 201 in the storage 77.

During automatic traveling of the spraying machine 1, the spraying processor 75 controls the spraying device 4 to open at least the water stop drain valve 45 and drive the pump 43, thereby executing a work of spraying the spraying material (chemical solution) from the spraying nozzles 41 in a desired spraying pattern. Here, the spraying processor 75 controls the spraying device 4 based on the current position of the spraying machine 1 such that the spraying machine 1 sprays the spraying material while traveling on the work route R1 (work routes R1a to R1f) and does not spray the spraying material while traveling on the movement route R2. Further, the spraying processor 75 switches the spraying pattern of the spraying device 4 according to on which of the work routes R1a to R1f the spraying machine 1 is traveling such that the spraying material (chemical solution) is sprayed toward the spraying target (crops V1).

Basically, the automatic traveling processor 76 and the spraying processor 75 of the control device 7 execute automatic traveling and the spraying work until the position of the spraying machine 1 reaches the automatic traveling end position Pg1. When the spraying machine 1 reaches the automatic traveling end position Pg1, it is determined that the spraying machine 1 has ended the work, and the control device 7 ends automatic traveling and the spraying work.

The control method according to the present embodiment is a method for controlling the spraying machine 1 including the machine body 10 capable of automatically traveling along the target route R0 and the multiple spraying nozzles 41 supported by the machine body 10 and spraying the spraying material at least during automatic traveling of the machine body 10. This control method includes determining whether or not the monitoring target, which includes at least some of the multiple spraying nozzles 41, has been clogged and stopping spraying of the spraying material if the monitoring target has been clogged. As described above, the control method according to the present embodiment includes the processing related to determination on clogging in the spraying nozzle 41 (also referred to as "nozzle clogging determination"). Here, the control method according to the present embodiment includes determining whether or not the spraying nozzle 41 has been clogged at least during automatic traveling of the spraying machine 1. The processing related to the nozzle clogging determination will be described in detail in the section of "[4.2] Processing Related to Nozzle Clogging Determination."

Thus, for example, in a case where the spraying nozzle 41 has been clogged, at least the spraying machine 1 stops spraying of the spraying material, and therefore, a work of spraying the spraying material is less likely to continue with the spraying nozzle 41 clogged. As a result, automatic traveling of the spraying machine 1 is less likely to end (i.e., the spraying machine 1 is less likely to reach the automatic traveling end position Pg1) while the spraying material is not sprayed as planned, and the spraying material is more likely to be sprayed as planned.

### Processing Related to Nozzle Clogging Determination

As shown in Fig. 13, the control device 7 starts the processing related to the nozzle clogging determination (determination on clogging in the spraying nozzle 41) in and after Step S2, taking a fact that the spraying machine 1 is automatically traveling as a trigger (S1: Yes). Here, if having received the automatic traveling start instruction from, e.g., the operation terminal 201 in a state in which the spraying machine 1 is at the automatic traveling start position Ps1, the control device 7 determines that the spraying machine 1 is automatically traveling (S1: Yes), and the processing proceeds to Step S2. On the other hand, if the control device 7 has not received the automatic traveling start instruction from, e.g., the operation terminal 201 or the spraying machine 1 has reached the automatic traveling end position Pg1, the control device 7 determines that the spraying machine 1 is not automatically traveling (S1: No).

In Step S2, the threshold processor 74 of the control device 7 sets the determination threshold used for the nozzle clogging determination by the determination processor 72. In the present embodiment, since the determination threshold is, as one example, the "predetermined pressure" to be compared with the pressure in the supply path 401, the threshold processor 74 sets the value of the "predetermined pressure." Here, the threshold processor 74 sets the determination threshold according to operation on, e.g., the user interface 61 by the user (operating person), for example. Alternatively, the threshold processor 74 may automatically set the determination threshold, for example, according to the status (operation status) of the spraying machine 1. As one example, in a case where a distance from the current position of the spraying machine 1 to the automatic traveling end position Pg1 is short, the threshold processor 74 sets the determination threshold high.

In Step S3, the acquisition processor 71 of the control device 7 acquires the pressure signal from the pressure sensor 47. Here, the pressure signal includes information regarding the pressure in the supply path 401 for supplying the spraying material to the monitoring target (the multiple spraying nozzles 41). That is, the pressure signal changes according to the pressure in the supply path 401.

In Step S4, the determination processor 72 of the control device 7 determines whether or not the monitoring target, which includes at least some of the multiple spraying nozzles 41, has been clogged. At this point, the determination processor 72 determines that the monitoring target has been clogged if the pressure in the supply path 401 for supplying the spraying material to the monitoring target satisfies the determination condition. In the present embodiment, the determination condition is the condition where the pressure in the supply path 401 is the predetermined pressure or more, based on the fact that if the spraying nozzle 41 has been clogged, the amount of spraying material (chemical solution) to be discharged from the spraying nozzle 41 decreases and the pressure in the supply path 401 increases accordingly. Thus, if determining, based on the pressure signal, that the pressure in the supply path 401 is the determination threshold (predetermined pressure) or more (S4: Yes), the determination processor 72 determines that the spraying nozzle 41, which is the monitoring target, has been clogged, and the processing proceeds to Step S5. On the other hand, if determining, based on the pressure signal, that the pressure in the supply path 401 is less than the determination threshold (predetermined pressure) (S4: No), the determination processor 72 determines that the spraying nozzle 41, which is the monitoring target, has not been clogged, and ends a series of processing related to the nozzle clogging determination.

In Step S5, the output processor 73 of the control device 7 notifies occurrence of clogging in the spraying nozzle 41 by indication on, e.g., the indicator 65, output of the warning sound, or a combination thereof. Thus, the operating person (user) can recognize that the spraying nozzle 41 has been clogged, and can take appropriate action.

In Step S6, the spraying processor 75 of the control device 7 causes the spraying device 4 to stop a work of spraying the spraying material. Specifically, in response to the determination processor 72 determining that the monitoring target has been clogged (S4: Yes), the spraying processor 75 stops spraying of the spraying material from the spraying nozzles 41 by stopping the pump 43 of the spraying device 4, for example. That is, in a case where the monitoring target has been clogged, the spraying processor 75 stops spraying of the spraying material.

In Step S7, the output processor 73 of the control device 7 stores, as the "clogging position information," the information regarding the current position of the machine body 10 in the storage 77. That is, the output processor 73 outputs, to the storage 77, at least the clogging position information regarding the position (clogging occurrence position) of the machine body 10 when the monitoring target is clogged, thereby writing the clogging position information in the storage 77. As one example, in a case where it is determined that the monitoring target has been clogged at an intermediate position on the work route R1c in Fig. 12 (S4: Yes), the output processor 73 stores, in the storage 77, information for specifying the intermediate position on the work route R1c as the clogging position information. As described above, the control method according to the present embodiment includes outputting the clogging position information regarding the position of the machine body 10 when the monitoring target is clogged. Thus, a location where the spraying nozzle 41 has been clogged can be specified based on the clogging position information.

In Step S8, the automatic traveling processor 76 of the control device 7 controls the travelers 11 to move the machine body 10 of the spraying machine 1 toward a retreated position. In Step S9, the automatic traveling processor 76 determines whether or not the machine body 10 has reached the retreated position. At this time, if the current position of the machine body 10 is coincident with the retreated position, the automatic traveling processor 76 determines that the machine body 10 has reached the retreated position (S9: Yes), and the processing proceeds to Step S10 to stop the travelers 11. On the other hand, if the current position of the machine body 10 is not coincident with the retreated position, it is determined that the machine body 10 has not reached the retreated position (S9: No), and the automatic traveling processor 76 causes the processing to proceed to Step S8.

Thus, in a case where it is determined that the monitoring target has been clogged (S4: Yes), the automatic traveling processor 76 does not stop the machine body 10 at the clogging occurrence position, but causes the machine body 10 of the spraying machine 1 to automatically travel to the retreated position in a state in which the spraying work by the spraying device 4 is temporarily stopped. Then, when the machine body 10 reaches the retreated position, the travelers 11 are stopped. As described above, the control method according to the present embodiment includes moving the machine body 10 to the retreated position in a state in which spraying of the spraying material is stopped and stopping the machine body 10 if the monitoring target has been clogged. Thus, if the spraying nozzle 41 has been clogged, the spraying machine 1 can be moved to the retreated position at which the user (operating person) can easily perform maintenance for the spraying nozzle 41, and therefore, the maintainability of the spraying nozzle 41 is improved.

The retreated position preferably includes at least one of a start position of the work route R1, on which the spraying machine 1 sprays the spraying material, of the target route R0, an end position of the work route R1, the automatic traveling start position Ps1 of the target route R0, or the automatic traveling end position Pg1 of the target route R0. Here, the start position of the work route R1 is the point of connection with the movement route R2 on which the machine body 10 travels immediately before on each work route R1, and the end position of the work route R1 is the point of connection with the movement route R2 on which the machine body 10 travels immediately after on each work route R1. As described above, by setting the retreated position excluding the intermediate position on the work route R1, the spraying machine 1 can be moved to the retreated position at which the user (operating person) can more easily perform maintenance for the spraying nozzle 41.

The retreated position is preferably selected from multiple candidate positions based on a relationship with the position of the machine body 10 when the monitoring target is clogged. The multiple candidate positions described herein include, for example, the start position of the work route R1, the end position of the work route R1, the automatic traveling start position Ps1 of the target route R0, and the automatic traveling end position Pg1 of the target route R0. As one example, from these multiple candidate positions, a candidate position closest to the clogging occurrence position (when the machine body 10 travels on the target route R0) is selected as the retreated position. Thus, a time required for the machine body 10 to move from the clogging occurrence position to the retreated position can be suppressed short, and improvement in a work efficiency can be expected.

The retreated position may be selected from the multiple candidate positions according to user's operation. The multiple candidate positions described herein include, for example, the start position of the work route R1, the end position of the work route R1, the automatic traveling start position Ps1 of the target route R0, and the automatic traveling end position Pg1 of the target route R0. As one example, the user (operating person) operates the operation terminal 201 to select an arbitrary candidate position from these multiple candidate positions in advance, and in this manner, the candidate position is selected as the retreated position. Thus, the spraying machine 1 can be moved to the retreated position desired by the user (operating person), and the maintainability of the spraying nozzle 41 is improved.

In Step S11, the determination processor 72 of the control device 7 determines whether or not clogging in the spraying nozzle 41 has been eliminated. At this time, for example, as in Step S4, the determination processor 72 determines whether or not clogging in the spraying nozzle 41 has been eliminated, based on the determination condition where the pressure in the supply path 401 is the predetermined pressure or more. Thus, if determining, based on the pressure signal, that the pressure in the supply path 401 is less than the determination threshold (predetermined pressure), the determination processor 72 determines that clogging in the spraying nozzle 41 which is the monitoring target has been eliminated (S11: Yes), and the processing proceeds to Step S12. On the other hand, if determining, based on the pressure signal, that the pressure in the supply path 401 is the determination threshold (predetermined pressure) or more, the determination processor 72 determines that clogging in the spraying nozzle 41 which is the monitoring target has not been eliminated (S11: No), and the processing proceeds to Step S10. Note that the determination method in Step S11 is not limited to this example. For example, the determination processor 72 may determine that clogging in the spraying nozzle 41 has been eliminated (S11: Yes), taking, as a trigger, execution of maintenance completion operation for, e.g., the operation terminal 201 after the operating person (user) has performed maintenance (e.g., washing, cleaning, or filter replacement) for the spraying nozzle 41,.

In Step S12, the automatic traveling processor 76 of the control device 7 controls the travelers 11 to move the machine body 10 of the spraying machine 1 toward the clogging occurrence position. The clogging occurrence position is the position of the machine body 10 when it is determined that the monitoring target has been clogged (S4: Yes), and is specified by the "clogging position information" stored in the storage 77 in Step S7. In Step S13, the automatic traveling processor 76 determines whether or not the machine body 10 has reached the clogging occurrence position. At this time, if the current position of the machine body 10 is coincident with the clogging occurrence position, the automatic traveling processor 76 determines that the machine body 10 has reached the clogging occurrence position (S13: Yes), and the processing proceeds to Step S14. On the other hand, if the current position of the machine body 10 is not coincident with the clogging occurrence position, it is determined that the machine body 10 has not reached the clogging occurrence position (S13: No), and the automatic traveling processor 76 causes the processing to proceed to Step S12.

In Step S14, the spraying processor 75 of the control device 7 causes the spraying device 4 to resume a work of spraying the spraying material. Specifically, in response to the machine body 10 having reached the clogging occurrence position (S13: Yes), the spraying processor 75 resumes spraying of the spraying material from the spraying nozzles 41 by driving the pump 43 of the spraying device 4, for example. As one example, in a case where it is determined that the monitoring target has been clogged at the intermediate position on the work route R1c in Fig. 12 (S4: Yes), the spraying processor 75 resumes spraying of the spraying material from the intermediate position (clogging occurrence position) on the work route R1c. Thereafter, the control device 7 executes a work of spraying the spraying material while causing the machine body 10 to automatically travel along the target route R0.

Thus, in a case where it is determined that clogging in the monitoring target has been eliminated (S11: Yes), the spraying processor 75 does not promptly resume the spraying work, but causes the machine body 10 of the spraying machine 1 to automatically travel to the clogging occurrence position in a state in which the spraying work by the spraying device 4 is stopped. When the machine body 10 reaches the clogging occurrence position, the spraying work is resumed. As described above, the control method according to the present embodiment includes resuming spraying of the spraying material from the position of the machine body 10 when the monitoring target is clogged after spraying of the spraying material has been stopped due to occurrence of clogging in the monitoring target. Thus, even in a case where the spraying nozzle 41 is clogged in the middle of the target route R0 and the spraying work is interrupted, the spraying work can be resumed from the middle of the target route R0, and therefore, be performed along the entire target route R0.

In Step S14, a series of processing related to the nozzle clogging determination ends. The control device 7 repeatedly executes the processing of Steps S1 to S14 above. Thus, as long as automatic traveling continues (S1: Yes), the above-described processing related to the nozzle clogging determination is executed.

### [5] Modifications

Hereinafter, modifications of the first embodiment will be listed. The modifications described below can be appropriately applied in combination.

The control device 7 in the present disclosure includes the computer system. The computer system mainly includes one or more processors and one or more memories as hardware. The processor(s) executes the program recorded in the memory of the computer system to implement the function of the control device 7 in the present disclosure. The program may be recorded in advance in the memory of the computer system, be provided via a telecommunication line, or be provided with recorded in a computer-readable non-transitory recording medium such as a memory card, an optical disk, or a hard disk drive. Some or all of the functions of the control device 7 may be implemented by an electronic circuit.

A configuration in which at least some functions of the control device 7 are aggregated in one housing is not essential for the control device 7, and the components of the control device 7 may be provided dispersedly in multiple housings. Conversely, in the control device 7, the functions distributed to the multiple devices (for example, the control device 7 and an operation device 8) may be integrated in one housing. At least some of the functions of the control device 7 may be implemented by, e.g., the cloud (cloud computing).

The spraying machine 1 is not limited to the orchard such as the vineyard or the apple orchard, and may be used for a work in other fields F1 or a work target area other than the field F1. The spraying material sprayed by the spraying machine 1 is not limited to the chemical solution, and may be, for example, water, a fertilizer, an antiseptic solution, other types of liquid, or powder. Similarly, the spraying target to which the spraying material is sprayed is not limited to the grape tree, and may be other crops or objects (including non-living objects) other than crops. The spraying machine 1 is not limited to the drone to be automatically operated, and may be operated (including remote operation) by a person (operating person) or be a riding type machine (manned aircraft) on which the operating person can board, for example. Also in this case, in order to grasp the current position of the spraying machine 1, the spraying machine 1 is provided with the antenna 21 and the like.

Multiple types of determination thresholds may be set. For example, in a case where a first determination threshold and a second determination threshold (> the first determination threshold) are set, if the pressure in the supply path 401 is the first determination threshold or more and less than the second determination threshold, the control device 7 may only issue a notification indicating clogging in the spraying nozzle 41 without stopping the spraying work. In this case, the control device 7 stops the spraying work only when the pressure in the supply path 401 reaches the second determination threshold or more. In addition to or instead of the notification, the control device 7 may perform, e.g., a control of decreasing the vehicle speed of the traveler 11 or a control of changing the spraying pattern.

If determining that the monitoring target has been clogged, the determination processor 72 may specify which one of the multiple spraying nozzles 41 has been clogged. For example, the determination processor 72 specifies which one of the spraying nozzles 41 has been clogged, based on the spraying pattern at the time of determination that the monitoring target has been clogged. As one example, if determining that the monitoring target has been clogged during the spraying work in the second spraying pattern in which the spraying material is sprayed only from the three spraying nozzles 41 of the second system, the determination processor 72 determines that any of the three spraying nozzles 41 of the second system has been clogged.

The support frame 3 may only be required to be attached to one end portion of the machine body 10 in the front-rear direction D3, and may be attached to the front of the machine body 10. In this case, the workers (spraying nozzles 41) supported by the support frame 3 are also arranged not at the rear but at the front of the machine body 10.

The spraying machine 1 may include a pair of spraying devices 4 arranged in the front-rear direction D3. With this configuration, the spraying machine 1 can execute the work (spraying work) by each of the spraying devices 4 (work devices) arranged in the front-rear direction D3, and the work efficiency can be improved as compared with a case where the work is performed only with one of the spraying devices 4. The spraying machine 1 may further include a rotary drive device that generates rotative force for rotating the support frame 3 about the rotation axis Ax1 relative to the machine body 10.

The machine body 10 may only be required to have the first block 10L and the second block 10R arranged in the right-left direction D2, and the first block 10L and the second block 10R may be switched in the left-right direction. That is, the first block 10L provided with the power source 63 and the like may be positioned on the right side, and the second block 10R provided with the user interface 61 and the like may be positioned on the left side.

The traveler 11 is not limited to the crawler type traveling device, and for example, may have one or more wheels and travel by rotation of the wheels. The traveler 11 is not limited to the configuration in which the traveler 11 is driven by the hydraulic motor, and for example, may be driven by an electric motor.

The spraying machine 1 is not limited to the air-assist spraying machine as in the first embodiment, and for example, may be an electrostatic spraying type or a combination of the air-assist type and the electrostatic spraying type. In the case of the electrostatic spraying type spraying machine 1, the airflow generator 5 can be omitted.

The power source 63 is not limited to the engine, and for example, may include a motor (electric motor) and a hybrid power source including an engine and a motor.

The machine body 10 of the spraying machine 1 does not necessarily have the gate shape, and the spraying machine 1 may be in such a form that the entire machine body 10 travels between a pair of crop columns Vr1 adjacent to each other (on the work passage). In this case, the spraying machine 1 travels on each work passage without straddling the crop column Vr1. In this case, the spraying device 4 performs the spraying work while switching among the spray pattern in which the chemical solution is sprayed to both sides in the right-left direction D2, the spray pattern in which the chemical solution is sprayed only to the left, and the spraying pattern in which the chemical solution is sprayed only to the right.

The antennas 21, 22 are not limited to the position specifying antennas, and for example, may be antennas for wireless communication. Further, the antennas 21, 22 are not limited to those for reception, and may be those for transmission or for reception and transmission.

The user interface 61 may have a unit that provides information to the user by, for example, voice output, in addition to or instead of the display 611. At least one of adjustment items (e.g., flow rate and pressure) may be automatically adjusted by the control device using the operator 612 of the user interface 61. In this case, the operator 612 can be omitted appropriately, and the user interface 61 may only display an adjustment result on the display 611.

### (Second Embodiment)

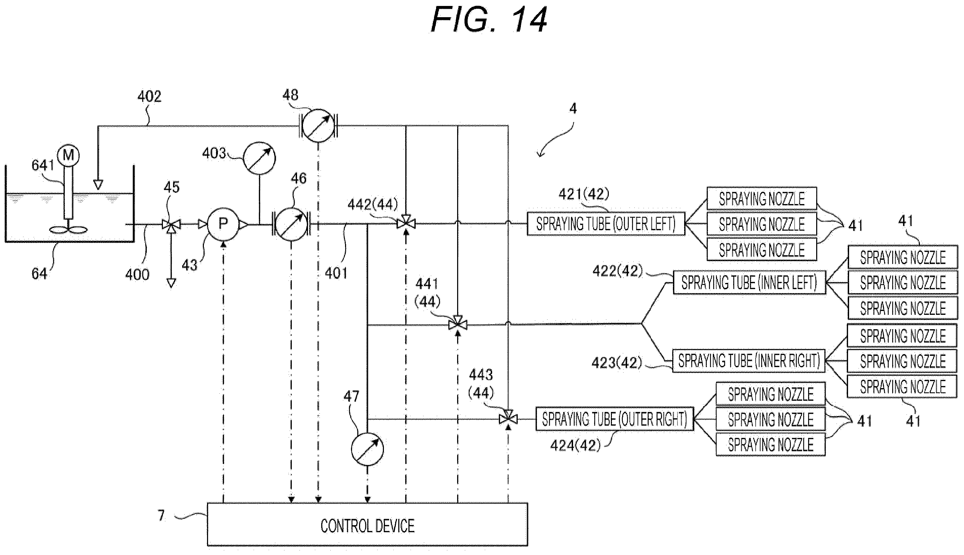

As shown in Fig. 14, a spraying machine 1 according to the present embodiment is different from the spraying machine 1 according to the first embodiment in that a spraying device 4 has a return-side flowmeter 48. Hereinafter, the same reference numerals are used to represent configurations similar to those of the first embodiment, and description thereof will be appropriately omitted.

The return-side flowmeter 48 detects the flow rate of spraying material (chemical solution) returned to a tank 64 through a return path 402. The return-side flowmeter 48 is, as one example, an electromagnetic flowmeter, and outputs a flow rate signal indicating a detection result to a control device 7 (acquisition processor 71).

In the spraying machine 1 according to the present embodiment, a determination processor 72 determines whether or not a spraying nozzle 41 has been clogged, based on the detection results of a discharge-side flowmeter 46 and the return-side flowmeter 48 instead of the detection result of the pressure sensor 47. As one example, in a state in which only a first valve 441 of first to third valves 441 to 443 connects a supply path 401 to spraying tubes 42, a spraying pattern is a first spraying pattern in which a spraying material is sprayed only from six spraying nozzles 41 of a first system. In the first spraying pattern, since six spraying nozzles 41 of a second system and a third system do not spray the spraying material, 50% of the flow rate of the spraying material discharged from a pump 43 returns to the tank 64 through the return path 402. Thus, in a normal state, the detection result of the return-side flowmeter 48 is 50% of the detection result of the discharge-side flowmeter 46. On the other hand, if any of the six spraying nozzles 41 of the first system has been clogged, the spraying material to be discharged from the spraying nozzles 41 flows into the return path 402 through the second valve 442 and/or the third valve 443. As a result, the flow rate of the return path 402 exceeds 50% of the flow rate of the supply path 401 so that occurrence of clogging in the spraying nozzle 41 can be determined based on the detection results of the discharge-side flowmeter 46 and the return-side flowmeter 48.

In the present embodiment, the pressure sensor 47 may be appropriately omitted. In addition, the determination processor 72 may further determine whether or not the spraying nozzle 41 has been clogged, by another method. The configuration (including modifications) according to the second embodiment can be employed in combination with various configurations (including the modifications) described in the first embodiment.

### LIST OF REFERENCE SIGNS

- 1: Spraying Machine
- 10: Machine Body
- 41: Spraying Nozzle
- 72: Determination Processor
- 75: Spraying Processor
- R0: Target Route
- R1: Work Route
- Ps1: Automatic Traveling Start Position
- Pg1: Automatic Traveling End Position

## Claims

1. A method for controlling a spraying machine including:
a machine body automatically travelable along a target route; and
multiple spraying nozzles supported by the machine body and spraying a spraying material at least during automatic traveling of the machine body, the method comprising:
determining whether or not a monitoring target, which includes at least some of the multiple spraying nozzles, has been clogged; and
stopping spraying of the spraying material in a case where the monitoring target has been clogged.

2. The method for controlling the spraying machine according to claim 1, comprising determining that the monitoring target has been clogged if a pressure in a supply path for supplying the spraying material to the monitoring target satisfies a determination condition.

3. The method for controlling the spraying machine according to claim 1 or 2, further comprising outputting clogging position information regarding a position of the machine body when the monitoring target is clogged.

4. The method for controlling the spraying machine according to any one of claims 1 to 3, further comprising moving the machine body to a retreated position in a state in which spraying of the spraying material is stopped and stopping the machine body if the monitoring target has been clogged.

5. The method for controlling the spraying machine according to claim 4, wherein the retreated position includes at least one of a start position of a work route, on which the spraying machine sprays the spraying material, of the target route, an end position of the work route, an automatic traveling start position of the target route, and an automatic traveling end position of the target route.

6. The method for controlling the spraying machine according to claim 4 or 5, wherein the retreated position is selected from multiple candidate positions based on a relationship with the position of the machine body when the monitoring target is clogged.

7. The method for controlling the spraying machine according to claim 4 or 5, wherein the retreated position is selected from the multiple candidate positions according to user's operation.

8. The method for controlling the spraying machine according to any one of claims 1 to 7, further comprising resuming spraying of the spraying material from the position of the machine body when the monitoring target is clogged after spraying of the spraying material has been stopped due to occurrence of clogging in the monitoring target.

9. The method for controlling the spraying machine according to any one of claims 1 to 8, further comprising setting a determination threshold used for determining whether or not the monitoring target has been clogged according to user's operation.

10. The method for controlling the spraying machine according to any one of claims 1 to 9, further comprising setting the determination threshold used for determining whether or not the monitoring target has been clogged according to a status of the spraying machine.

11. A spraying machine control program causing one or more processors to execute the method for controlling the spraying machine according to any one of claims 1 to 10.

12. A spraying machine comprising:
a machine body automatically travelable along a target route;
multiple spraying nozzles supported by the machine body and spraying a spraying material at least during automatic traveling of the machine body;
a determination processor that determines whether or not a monitoring target, which includes at least some of the multiple spraying nozzles, has been clogged; and
a spraying processor that stops spraying of the spraying material in a case where the monitoring target has been clogged.
